# EUROPEAN PATENT APPLICATION

(11) **EP 4 401 274 A2**
(43) Date of publication of application: **17.07.2024**
(21) Application number: 24150028.9
(22) Date of filing: 02.01.2024
(51) Int. Cl.: H02J 7/00

(54) **BACKPACK BLOWER AND METHOD OF OPERATING THE SAME**

(30) Priority: 13.01.2023 US 202363438926 P
(71) Applicant: Milwaukee Electric Tool Corporation, Brookfield, WI 53005 (US)
(72) Inventor: GOLDING, Sam, Brookfield 53005 (US); GULLIKSEN, Connor, Brookfield 53005 (US); BARTLETT, Shannon C., Cedarburg 53012 (US); WHEALON, John L., West Bend 53095 (US); SCHLOSSER, Drake J., Hartford 53027 (US); BULLINGTON, Christopher S., Milwaukee 53202 (US); GORDON Benjamin, Brookfield, 53005 (US); CARPENTER, Mitchell E., Milwaukee 53224 (US); BUTERA, John, Brookfield 53005 (US)
(74) Representative: Forresters IP LLP

(57) **Abstract**

A method of switching between groups of battery packs for supplying power to a power tool includes connecting a first group of battery packs and a second group of battery packs to a battery pack interface, discharging the first group to supply power to the power tool, and determining, using an electronic controller, a first condition of the first group. The method also includes discharging the second group to supply power to the power tool based on the first condition, determining, via the electronic controller, a second condition of the second group, determining, via the electronic controller, whether the first group has reached end of discharge, and discharging, in response to determining that the first group has not reached end of discharge, the first group based on the second condition.

## Description

### CROSS-REFERENCE TO RELATED APPLICATIONS

The present application claims priority to U.S. provisional application number 63/438,926, filed January 13, 2023, the entire contents of which are incorporated by reference herein.

### FIELD

Embodiments described herein relate to electric power tools.

### SUMMARY

Methods described herein include switching between groups of battery packs for supplying power to a power tool including an electronic controller. The methods include connecting a first group of battery packs to a battery pack interface of the power tool, connecting a second group of battery packs to the battery pack interface, discharging the first group of battery packs to supply power to the power tool, determining, via the electronic controller, a first condition of the first group of battery packs, and discharging the second group of battery packs to supply power to the power tool based on the first condition of the first group of battery packs. The methods also include determining, via the electronic controller, a second condition of the second group of battery packs, determining, via the electronic controller, whether the first group of battery packs has reached end of discharge, and discharging, in response to determining that the first group of battery packs has not reached end of discharge, the first group of battery packs based on the second condition of the second group of battery packs. The methods also include discharging, in response to determining that the first group of battery packs has reached end of discharge, the second group of battery packs.

A battery pack powered power tool includes a backpack portion configured to be supported by a user, the backpack portion including a backing plate, a first battery pack interface coupled to the backing plate for receiving a first battery, and a second battery pack interface coupled to the backing plate for receiving a second battery pack. The second battery pack interface is positioned below the first battery pack interface. The first battery pack interface is angled relative to the second battery pack interface by an angle between 45 and 90 degrees. The battery pack powered power tool also includes an arm portion including a rigid conduit and a flexible conduit coupling the rigid conduit to the backpack portion, and a handle having a user input and interface configured to control operation of the battery pack powered power tool.

Before any embodiments are explained in detail, it is to be understood that the embodiments are not limited in application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

The disclosure also provides, in another aspect, a method of switching between groups of battery packs for supplying power to a power tool including an electronic controller, the method comprising:
connecting a first group of battery packs to a battery pack interface of the power tool;
connecting a second group of battery packs to the battery pack interface of the power tool;
discharging the first group of battery packs to supply power to the power tool;
determining, using the electronic controller, a first condition of the first group of battery packs;
discharging the second group of battery packs to supply power to the power tool based on the first condition of the first group of battery packs;
determining, using the electronic controller, a second condition of the second group of battery packs;
determining, using the electronic controller, whether the first group of battery packs has reached end of discharge; and
discharging, in response to determining that the first group of battery packs has not reached end of discharge, the first group of battery packs based on the second condition.

The method may further comprise:
discharging, in response to determining that the first group of battery packs has reached end of discharge, the second group of battery packs.

The second group of battery packs may be connected in parallel with the first group of battery packs.

The first group of battery packs may include a first battery pack and a second battery pack; and the second group of battery packs may include a third battery pack and a fourth battery pack.

The first battery pack may be connected in series with the second battery pack; and the third battery pack may be connected in series with the fourth battery pack.

The method may further comprise:
determining, using the electronic controller, whether the first group of battery packs is connected to the battery pack interface;
displaying, using a user interface and in response to determining that the first group of battery packs is connected to the battery pack interface, a first indication associated with the first group of battery packs;
determining, using the electronic controller, whether the second group of battery packs is connected to the battery pack interface; and
displaying, using the user interface and in response to determining that the second group of battery packs is connected to the battery pack interface, a second indication associated with the second group of battery packs.

The method may further comprise:
determining, using the electronic controller, a state of charge associated with the first group of battery packs;
displaying, using the user interface, the state of charge associated with the first group of battery packs;
determining, using the electronic controller, a state of charge associated with the second group of battery packs; and
displaying, using the user interface, the state of charge associated with the second group of battery packs.

The disclosure also provides, in another aspect, a battery pack powered power tool comprising:
a backpack portion configured to be supported by a user, the backpack portion including a backing plate, a first battery pack interface coupled to the backing plate for receiving a first battery, and a second battery pack interface coupled to the backing plate for receiving a second battery pack, the second battery pack interface positioned below the first battery pack interface, wherein the first battery pack interface is angled relative to the second battery pack interface by an angle between 45 and 90 degrees; and
an arm portion including a rigid conduit and a flexible conduit coupling the rigid conduit to the backpack portion, and a handle having a user input and interface configured to control operation of the battery pack powered power tool.

The first battery pack interface may extend away from the backing plate by a first distance measured perpendicular to the backing plate, wherein the second battery pack interface may extend away from the backing plate by a second distance measured perpendicular to the backing plate, wherein the first distance may be less than the second distance.

The battery pack powered power tool may further comprise an L-shaped protrusion having a substantially vertical leg and a substantially horizontal leg, the L-shaped protrusion extending rearward from the backing plate 1018, wherein the first battery pack interface may be formed in the substantially vertical leg and the second battery pack interface may be formed in the substantially horizontal leg.

The backpack portion may further comprise an air mover, a motor configured to drive the air mover, an inlet through which the air mover is configured to draw air, and an outlet in communication with the flexible arm portion.

The flexible conduit may be coupled to the outlet of the backpack portion to receive airflow from the air mover, wherein the rigid conduit may be coupled to the flexible conduit to receive airflow from the flexible conduit, and wherein the rigid conduit may include an outlet for expelling the airflow from the rigid conduit.

The handle may include a trigger configured to move from a disengaged position towards a fully engaged position to actuate the air mover.

The handle may include a power hold actuator having a locking cam configured to selectively engage the trigger such that in an unlocking position, the locking cam does not limit the movement of the trigger and in a locking position, the locking cam engages the trigger to maintain the current position of the trigger.

The first battery pack interface may be one of a plurality of first battery pack interfaces spaced apart from one another along the backing plate, and wherein the second battery pack interface may be one of a plurality of second battery pack interfaces spaced apart from one another along the backing plate, wherein the plurality of first and second battery pack interfaces form a rectangular array.

The first battery pack interface may be angled relative to the second battery pack interface by less than 90 degrees.

The first battery pack interface may be angled relative to the second battery pack interface by an angle between 75 and 85 degrees.

The battery pack powered power tool may further comprise a controller programmed to switch between groups of battery packs for supplying power to a power tool including an electronic controller, the controller programmed to:
connect a first group of battery packs to the first and second battery pack interfaces of the power tool;
connect a second group of battery packs to the first battery pack interface of the power tool;
discharge the first group of battery packs to supply power to the power tool;
determine, using the electronic controller, a first condition of the first group of battery packs;
discharge the second group of battery packs to supply power to the power tool based on the first condition of the first group of battery packs;
determine, using the electronic controller, a second condition of the second group of battery packs;
determine, using the electronic controller, whether the first group of battery packs has reached end of discharge; and
discharge, in response to determining that the first group of battery packs has not reached end of discharge, the first group of battery packs based on the second condition.

The battery pack powered power tool may further comprise a controller mounted to the backpack portion and programmed to receive signals from the user input and interface via a cable, wherein the cable may be external to the rigid conduit and the flexible conduit.

The handle may be repositionable along a length of the rigid conduit between a plurality of positions.

Other aspects of the embodiments will become apparent by consideration of the detailed description and accompanying drawings.

### BRIEF DESCRIPTION OF THE DRAWINGS

FIG. 1 illustrates a control system for a power tool, in accordance with embodiments described herein.
FIG. 2A illustrates a circuit schematic including battery packs for connection to the control system of FIG. 1, in accordance with embodiments described herein.
FIG. 2B illustrates a circuit schematic including battery packs for connection to the control system of FIG. 1, in accordance with embodiments described herein.
FIG. 2C illustrates a circuit schematic including battery packs for connection to the control system of FIG. 1, in accordance with embodiments described herein.
FIG. 3 illustrates a table of compatible battery pack combinations and incompatible battery pack combinations for operation of a power tool, in accordance with embodiments described herein.
FIG. 4A illustrates a system including a graphical user interface of a power tool and a battery pack combination, in accordance with embodiments described herein.
FIG. 4B illustrates a system including a graphical user interface of a power tool and a battery pack combination, in accordance with embodiments described herein.
FIG. 4C illustrates a system including a graphical user interface of a power tool and a battery pack combination, in accordance with embodiments described herein.
FIG. 4D illustrates a system including a graphical user interface of a power tool and a battery pack combination, in accordance with embodiments described herein.
FIG. 4E illustrates a system including a graphical user interface of a power tool and a battery pack combination, in accordance with embodiments described herein.
FIG. 5 illustrates a flow chart of a method for switching between groups of battery packs for supplying power to a power tool, in accordance with embodiments described herein.
FIG. 6 illustrates a perspective view of a battery pack powered power tool.
FIG. 7 illustrates a first perspective view of a backpack portion of the battery pack powered power tool of FIG. 6.
FIG. 8 illustrates a second perspective view of the backpack portion of the battery pack powered power tool of FIG. 6.
FIG. 9 illustrates a side view of the backpack portion of the battery pack powered power tool of FIG. 6 with batteries mounted to the backpack portion.
FIG. 10 illustrates a side view of the backpack portion of the battery pack powered power tool of FIG. 6 with batteries removed from the backpack portion.
FIG. 11 illustrates a third perspective view of the backpack portion of the battery pack powered power tool of FIG. 6.
FIG. 12 illustrates a cross-sectional perspective view of the backpack portion of the battery pack powered power tool of FIG. 6.
FIG. 13 illustrates a first side view of the battery pack powered power tool of FIG. 6.
FIG. 14 illustrates a second side view of the battery pack powered power tool of FIG. 6.
FIG. 15 illustrates a first perspective view of a handle of the battery pack powered power tool of FIG. 6.
FIG. 16 illustrates a second perspective view of a handle of the battery pack powered power tool of FIG. 6.
FIG. 17 illustrates a trigger mechanism of the handle of FIG. 15.
FIG. 18 illustrates a third perspective view of a handle of the battery pack powered power tool of FIG. 6 and the graphical user interface located thereon.

### DETAILED DESCRIPTION

Embodiments described herein relate to a method of switching between groups of battery packs for supplying power to a power tool. The method for switching between groups of battery packs allows for a drop in power provided by the groups of battery packs to be prevented until the full discharge of each battery pack of the groups of battery packs. Consistently switching between groups of battery packs allows for the gradual discharge of each battery pack of the groups of battery packs.

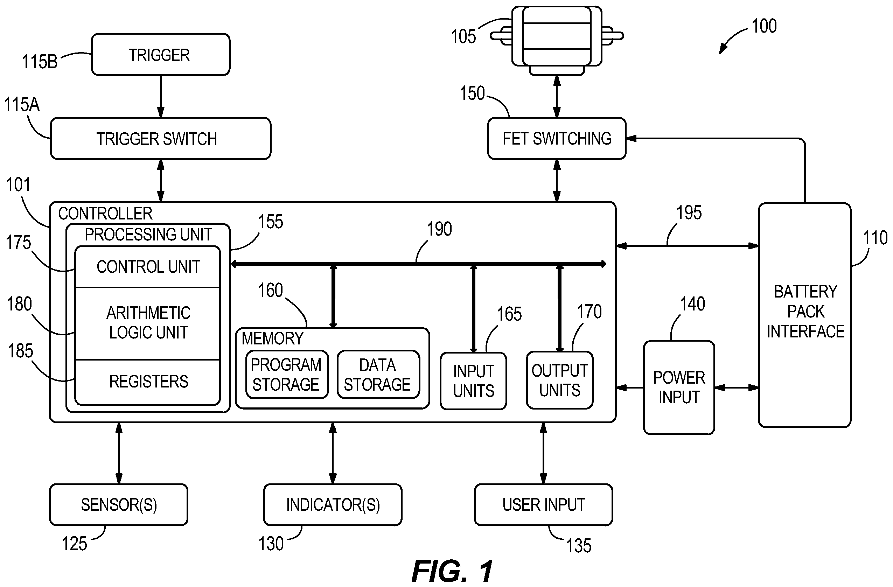

FIG. 1 illustrates a control system 100 for a power tool 1000, for example a battery pack powered power tool or battery pack powered outdoor power equipment. The control system 100 can be part of or otherwise connected to a printed circuit board ("PCB") and can include a controller 101. The controller 101 is electrically and/or communicatively connected to a variety of modules or components of the power tool 1000. For example, the illustrated controller 101 is electrically connected to a motor 105, a battery pack interface 110 (connectable to a plurality of battery packs 210A-D via a plurality of battery pack receptacles or interfaces 1022), a trigger switch 115A (connected to a trigger 115B), one or more sensors or sensing circuits 125, one or more indicators 130, a user input module 135, a power input module 140, and a switching module or field effect transistor ("FET") switching module 150 (e.g., including a plurality of switching FETs). The controller 101 includes combinations of hardware and software that are operable to, among other things, control the operation of the power tool 1000, monitor the operation of the power tool 1000, control switching between the plurality of battery packs, monitor the operation of the plurality of battery packs, activate the one or more indicators 130 (e.g., an LED), etc.

In some embodiments, each battery pack of the plurality of battery packs includes any number of battery cells. The battery cells can be arranged in series, parallel, or a series-parallel combination. In some embodiments, the each battery pack of the plurality of battery packs includes a number of battery cells (e.g., between 3 and 50 battery cells) connected in series, parallel, or a series-parallel combination in order to produce a battery pack having a desired combination of nominal battery pack voltage and battery capacity.

The battery cells are lithium-based battery cells having a chemistry of, for example, lithium-cobalt ("Li-Co"), lithium-manganese ("Li-Mn"), or Li-Mn spinel. In some embodiments, the battery cells have other suitable lithium or lithium-based chemistries, such as a lithium-based chemistry that includes manganese, etc. The battery cells within the each battery pack of the plurality of battery packs provide operational power (e.g., voltage and current) to the power tools. In some embodiments, each battery cell has a nominal voltage of approximately 3.6V, such that the battery pack has a nominal voltage of approximately 18V. In other embodiments, the battery cells have different nominal voltages, such as, for example, between 3.6V and 4.2V, and the battery pack has a different nominal voltage, such as, for example, 10.8V, 12V, 14.4V, 24V, 28V, 36V, 72V, 80V, 120V, 150V, between 10.8V and 150V, etc. The battery cells also have a capacity of, for example, between approximately 1.0 ampere-hours ("Ah") and 10.0Ah. In exemplary embodiments, the battery cells have capacities of approximately, 1.5Ah, 2.4Ah, 3.0Ah, 4.0Ah, 5.0Ah, 10.0Ah, between 1.5Ah and 10.0Ah, etc.

The controller 101 includes a plurality of electrical and electronic components that provide power, operational control, and protection to the components and modules within the controller 101 and/or the power tool 1000. For example, the controller 101 includes, among other things, a processing unit 155 (e.g., a microprocessor, a microcontroller, electronic processor, electronic controller, or another suitable programmable device), a memory 160, input units 165, and output units 170. The processing unit 155 includes, among other things, a control unit 175, an arithmetic logic unit ("ALU") 180, and a plurality of registers 185 (shown as a group of registers in FIG. 1), and is implemented using a known computer architecture (e.g., a modified Harvard architecture, a von Neumann architecture, etc.). The processing unit 155, the memory 160, the input units 165, and the output units 170, as well as the various modules or circuits connected to the controller 101 are connected by one or more control and/or data buses (e.g., common bus 190). The control and/or data buses are shown generally in FIG. 1 for illustrative purposes. The use of one or more control and/or data buses for the interconnection between and communication among the various modules, circuits, and components would be known to a person skilled in the art in view of the embodiments described herein.

The memory 160 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 155 is connected to the memory 160 and executes software instructions that are capable of being stored in a RAM of the memory 160 (e.g., during execution), a ROM of the memory 160 (e.g., on a generally permanent basis), or another non-transitory computer readable medium such as another memory or a disc. Software included in the implementation of the power tool 1000 can be stored in the memory 160 of the controller 101. The software includes, for example, firmware, one or more applications, program data, filters, rules, one or more program modules, and other executable instructions. The controller 101 is configured to retrieve from the memory 160 and execute, among other things, instructions related to the control processes and methods described herein. In other constructions, the controller 101 includes additional, fewer, or different components.

The battery pack interface 110 includes a combination of mechanical components (e.g., rails, grooves, latches, etc.) and electrical components (e.g., one or more terminals) configured to and operable for interfacing (e.g., mechanically, electrically, and communicatively connecting) the power tool 1000 with one or more battery pack (e.g., a plurality of battery packs). For example, power provided by each battery pack of the plurality of battery packs to the power tool 1000 is provided through the battery pack interface 110 to the power input module 140 and/or the switching module 150. The power input module 140 includes combinations of active and passive components to regulate or control the power received from each battery pack of the plurality of battery packs prior to power being provided to the controller 101. The battery pack interface 110 also supplies power to the FET switching module 150 to be switched by the switching FETs to selectively provide power to the motor 105. The battery pack interface 110 also includes, for example, a communication line 195 for providing a communication line or link between the controller 101 and each battery pack of the plurality of battery packs.

The indicators 130 include, for example, one or more light-emitting diodes ("LEDs"). The indicators 130 can be configured to display conditions of, or information associated with, the power tool 1000. For example, the indicators 130 are configured to indicate measured electrical characteristics of the power tool 1000 and/or the plurality of battery packs, the status of the plurality of battery packs, etc. In some embodiments, the indicators 130 are located on a user interface (e.g., a graphical user interface) of the power tool 1000. The user input module 135 is operably coupled to the controller 101 to, for example, select a forward mode of operation or a reverse mode of operation, a torque and/or speed setting for the power tool 1000 (e.g., using torque and/or speed switches), etc. In some embodiments, the user input module 135 includes a combination of digital and analog input or output devices required to achieve a desired level of operation for the power tool 1000, such as one or more knobs, one or more dials, one or more switches, one or more buttons, etc.

The controller 101 is configured to determine a condition of each battery pack of the plurality of battery packs and generate one or more control signals related to the condition. For example, the sensors 125 include one or more current sensors, one or more voltage sensors, one or more temperature sensors, one or more timers, etc. For example, the temperature of each battery pack of the plurality of battery packs can be determined or calculated using a plurality of temperature sensors which sense the temperature of each battery pack of the plurality of battery packs. The controller 101 calculates or includes, within memory 160, predetermined operational threshold values and limits for operation of the plurality of battery packs. For example, when a potential thermal failure (e.g., of a battery pack of the plurality of battery packs) is detected or predicted by the controller 101, power received from the plurality of battery packs can be limited or interrupted until the potential for thermal failure is reduced. If the controller 101 detects one or more such conditions of the plurality of battery packs or determines that a condition of the plurality of battery packs no longer exists, the controller 101 is configured to provide information and/or control signals to another component of the plurality of battery packs (e.g., the battery pack interface 110, the indicators 130, etc.).

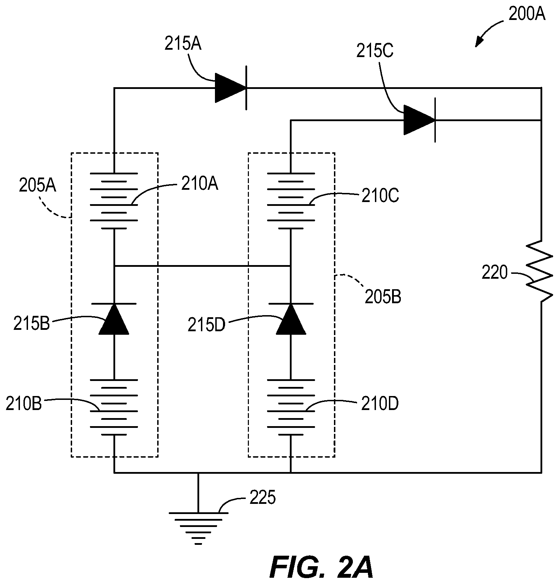

FIG. 2A illustrates a schematic of a circuit 200A, according to some embodiments. The circuit 200A includes a first group of battery packs 205A and a second group of battery packs 205B. In the illustrated embodiment, the second group of battery packs 205B is electrically connected in parallel with the first group of battery packs 205A. In other embodiments, the second group of battery packs 205B is electrically connected in series or series-parallel combination with the first group of battery packs 205A. The first group of battery packs 205A includes a first battery pack 210A and a second battery pack 210B. In the illustrated embodiment, the first battery pack 210A is electrically connected in series with the second battery pack 210B. In other embodiments, the first battery pack 210A is electrically connected in parallel or series-parallel with the second battery pack 210B. The second group of battery packs 205B includes a third battery pack 210C and a fourth battery pack 210D. In the illustrated embodiment, the third battery pack 210C is electrically connected in series with the fourth battery pack 210D. In other embodiments, the third battery pack 210C is electrically connected in parallel or series-parallel with the fourth battery pack 210D. In some embodiments, the first battery pack 210A, the second battery pack 210B, the third battery pack 210C, and the fourth battery pack 210D form a 2-series 2-parallel ("2S2P") configuration. In other embodiments, the first group of battery packs 205A is connected in parallel with the second group of battery packs 205B, but the two groups are only electrically connected at the most positive and most negative voltage nodes (e.g., there are not intermediate connections between the groups of battery packs).

Each battery pack 210A-210D is electrically connected in series with a diode of a plurality of diodes 215A-215D. In the illustrated example, a first diode 215A is electrically connected in series with the first battery pack 210A, a second diode 215B is electrically connected in series with the second battery pack 210B, a third diode 215C is electrically connected in series with the third battery pack 210C, and a fourth diode 215D is electrically connected in series with the fourth battery pack 210D. By including each diode 215A-215D in series with each battery pack 210A-210D, the circuit 200A prevents current from flowing backward from each battery pack 210A-210D. As a benefit of the construction of the circuit 200A, no additional firmware is required to sequentially discharge each battery pack 210A-210D, as each diode 215A-215D is in an 'on' state at the same time. The first group of battery packs 205A and the second group of battery packs 205B are further connected to a load 220 (illustrated as a resistive load). In some embodiments, the load 220 represents mechanical connection and/or electrical connection to the battery pack interface 110 when the power tool 1000 receives operational power from the first group of battery packs 205A or the second group of battery packs 205B. Additionally, the components of the circuit 200A are electrically connected to a local ground 225 of the power tool 1000.

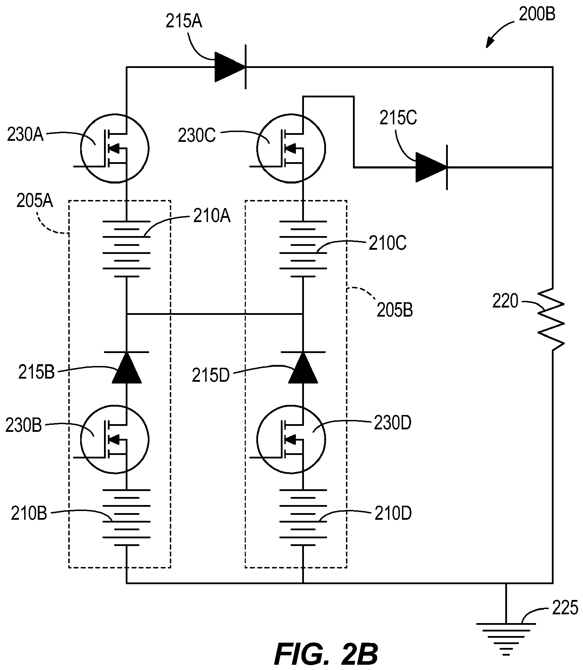

FIG. 2B illustrates a schematic of a circuit 200B, according to some embodiments. In the illustrated embodiment, and in the interest of conciseness and brevity, the circuit 200B includes similar components to the components of the circuit 200A, as described above with reference to FIG. 2A. In some embodiments, the circuit 200B includes a FET of a plurality of FETs 230A-230D electrically connected in series with each diode of the plurality of diodes 215A-215D. For example, a first FET 230A is connected in series between the first battery pack 210A and the first diode 215A, a second FET 230B is connected in series between the second battery pack 210B and the second diode 215B, a third FET 230C is connected in series between the third battery pack 210C and the third diode 215C, and a fourth FET 230D is connected in series between the fourth battery pack 210D and the fourth diode 215D. By including each FET 230A-230D in series with each diode 215A-215D, respectively, the circuit 200B controls current supplied by each battery pack 210A-210D through each diode 215A-215D, respectively. For example, if the controller 101 determines an overtemperature condition of the first battery pack 210A based on one or more signals received from the sensors 125, the controller 101 generates a control signal and transmits the control signal to the circuit 200B to close the first FET 230A to limit current supplied through the first diode 215A. In some embodiments, the circuit 200B includes one or more thermistors connected to or associated with each diode 215A-215D. The controller 101 determines when to open or close each FET 230A-230D based on one or more signals received from the one or more thermistors.

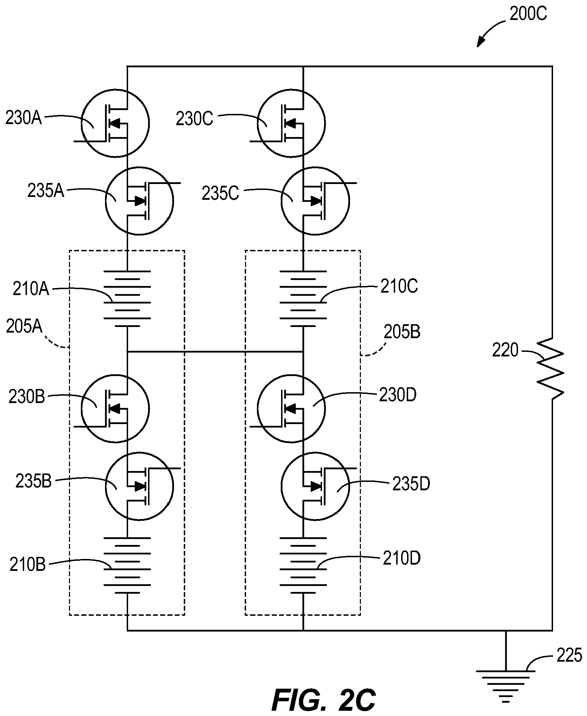

FIG. 2C illustrates a schematic of a circuit 200C, according to some embodiments. In the illustrated embodiment, and in the interest of conciseness and brevity, the circuit 200C includes similar components to the components of circuit 200B as described above with reference to FIG. 2B. In some embodiments, the circuit 200C does not include each diode 215A-215D. In such embodiments, the circuit 200C can include a secondary FET of a plurality of secondary FETs 235A-235D electrically connected in series with each FET of the plurality of FETs 230A-230D. For example, a first secondary FET 235A is connected in series between the first battery pack 210A and the first FET 230A, a second secondary FET 235B is connected in series between the second battery pack 210B and the second FET 230B, a third secondary FET 235C is connected in series between the third battery pack 210C and the third FET 230C, and a fourth secondary FET 23 5D is connected in series between the fourth battery pack 210D and the fourth FET 230D. By including each secondary FET 235A-235D in series with each battery pack 210A-210D, the circuit 200C reduces leakage current and current losses. In some embodiments, each secondary FET 235A-235D has an inverted orientation compared to each FET 230A-230D, respectively. Thus, each secondary FET 235A-235D creates an inverted pair with each FET 230A-230D counterpart. The inverted pairs of each secondary FET 235A-235D and each FET 230A-230D allows the circuit 200C to control discharge of each battery pack 210A-210D, respectively.

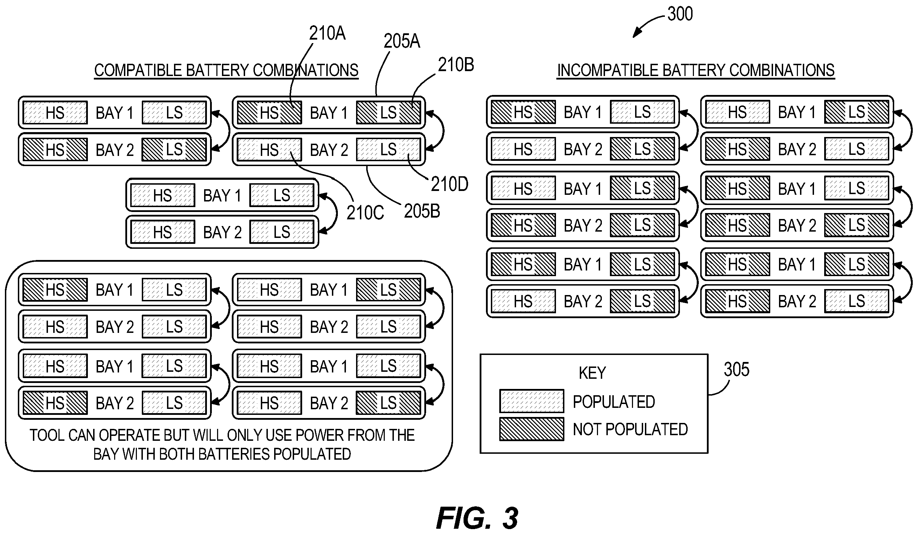

FIG. 3 illustrates a table 300 of compatible battery pack combinations and incompatible battery pack combinations for operation of the power tool 1000, according to some embodiments. In some embodiments, the table 300 illustrates battery pack combinations connected to the circuits 200A, 200B, 200C. The table 300 includes the first group of battery packs 205A (e.g., battery pack bay 1), the second group of battery packs 205B (e.g., battery pack bay 2), the first battery pack 210A, the second battery pack 210B, the third battery pack 210C, and the fourth battery pack 210D. In the illustrated embodiment, each battery pack 210A-210D fills a terminal spot (e.g., each battery pack 210A-210D is connected to a terminal of the battery pack interface 110) within the first group of battery packs 205A or the second group of battery packs 205B. The table 300 includes a key 305. The key 305 shows a color coordination of each terminal spot. For example, if the terminal spot is green, the terminal spot is populated by a battery pack (e.g., a battery pack is connected to a terminal of the battery pack interface 110). In another example, if the terminal spot is red, the terminal spot is not populated by a battery pack (e.g., a battery pack is not connected to a terminal of the battery pack interface 110). In some embodiments, the power tool 1000 does not perform any operation if only one battery pack populates a terminal spot. For example, the power tool 1000 performs an operation when two, three, or four battery packs populate a corresponding number of terminal spots.

If three battery packs populate three terminal spots (e.g., the first battery pack 210A, the second battery pack 210B, and the third battery pack 210C are connected to the battery pack interface 110), the power tool 1000 will only utilize the first group of battery packs 205A (e.g., the first battery pack 210A and the second battery pack 210B). In some embodiments, if two battery packs populate two terminal spots, the power tool 1000 performs an operation if the two battery packs populate terminal spots of the same group of battery packs (e.g., the first battery pack 210A and the second battery pack 210B). In some embodiments, if four battery packs populate four terminal spots (e.g., all terminal spots are populated), the controller 101 switches between the first group of battery packs 205A and the second group of battery packs 205B to supply power to the power tool 1000. In some embodiments, the controller 101 determines a state of charge ("SOC") of the first group of battery packs 205A and an SOC of the second group of battery packs 205B based on one or more signals received from the sensors 125. In some embodiments, the controller 101 switches between groups of battery packs based on the SOC of the groups of battery packs. For example, if the SOC of the first group of battery packs 205A decreases below a SOC threshold, the controller 101 switches to the second group of battery packs 205B to supply power to the power tool 1000. In some embodiments, switching between the first group of battery packs 205A and the second group of battery packs 205B is based on an elapsed time.

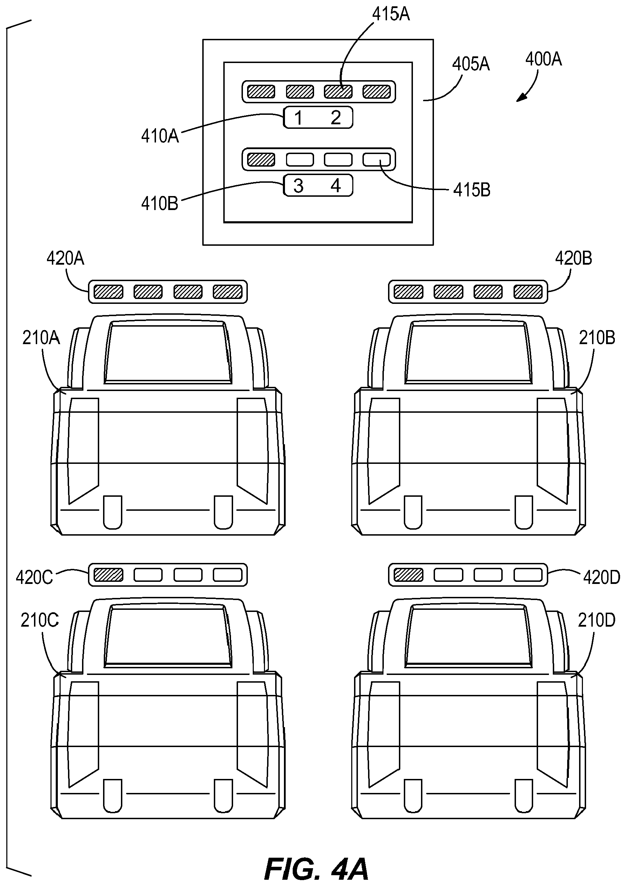

FIG. 4A illustrates a system 400A including a graphical user interface ("GUI") 405A of the power tool 1000 and a battery pack combination, according to some embodiments. In some embodiments, the GUI 405A is any type of suitable user interface or display. In some embodiments, the GUI 405A is disposed on the handle 1236 of the power tool 1000 for display to a user. The GUI 405A includes a first group of battery packs indicator 410A and a second group of battery packs indicator 410B. In some embodiments, the first group of battery packs indicator 410A and the second group of battery packs indicator 410B include similar components to the one or more indicators 130. In some embodiments, the controller 101 determines whether the first group of battery packs 205A is connected to the battery pack interface 110. In response to determining that the first group of battery packs 205A is connected to the battery pack interface, the first group of battery packs indicator 410A displays a SOC of the first group of battery packs 205A. In some embodiments, when the controller 101 selects the first group of battery packs 205A to discharge power to the power tool 1000, the first group of battery packs indicator 410A illuminates. In some embodiments, the first group of battery packs indicator 410A illuminates a color LED or a white LED. In some embodiments, the controller 101 determines whether the second group of battery packs 205B is connected to the battery pack interface 110. In response to determining that the second group of battery packs 205B is connected to the battery pack interface, the second group of battery packs indicator 410B displays a SOC of the second group of battery packs 205B. In some embodiments, when the controller 101 selects the second group of battery packs 205B to discharge power to the power tool 1000, the second group of battery packs indicator 410B illuminates. In some embodiments, the second group of battery packs indicator 410B illuminates a color LED or a white LED.

In some embodiments, the GUI 405A further includes a first group of battery packs fuel gauge 415A and a second group of battery packs fuel gauge 415B for indicating the SOC of each group of battery packs. In the illustrated embodiment, the first group of battery packs fuel gauge 415A and the second group of battery packs fuel gauge 415B each include four indicators 130. In some embodiments, the controller 101 determines the SOC of the first group of battery packs 205A and the SOC of the second group of battery packs 205B based on a remaining battery capacity of each battery pack of the plurality of battery packs 210A-210D. In some embodiments, the first group of battery packs fuel gauge 415A provides an indication of the SOC of the first group of battery packs 205A. In such embodiments, the indication of the SOC of the first group of battery packs 205A is the lowest SOC battery pack between the first battery pack 210A (illustrated as first battery pack fuel gauge 420A) and the second battery pack 210B (illustrated as second battery pack fuel gauge 420B). In some embodiments, the second group of battery packs fuel gauge 415B provides an indication of the SOC of the second group of battery packs 205B. In such embodiments, the indication of the SOC of the second group of battery packs 205B is the lowest SOC battery pack between the third battery pack 210C (illustrated as third battery pack fuel gauge 420C) and the fourth battery pack 210D (illustrated as second battery pack fuel gauge 420D).

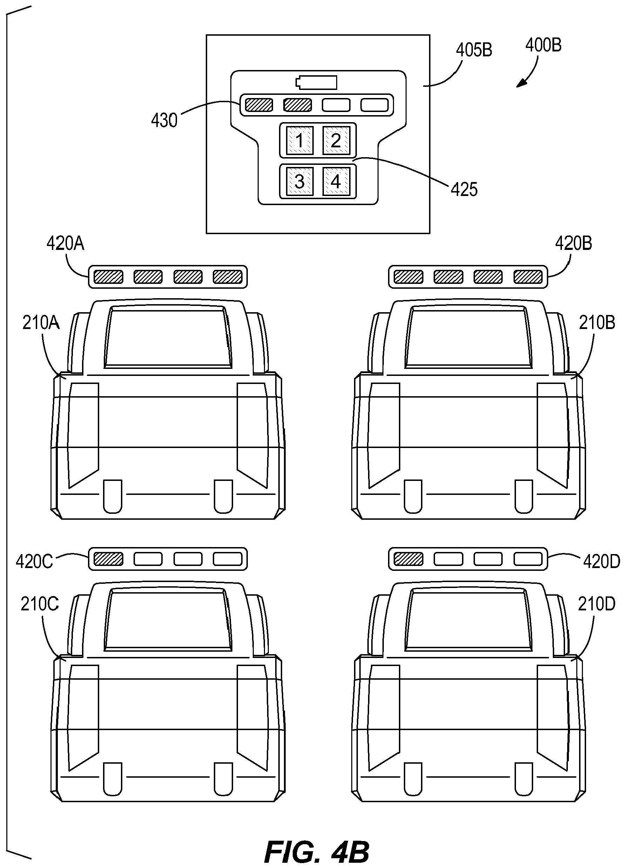

FIG. 4B illustrates a system 400B including a GUI 405B of the power tool 1000 and a battery pack combination, according to some embodiments. In some embodiments, the GUI 405B is any type of suitable user interface or display. In some embodiments, the GUI 405B is disposed on the handle 1236 of the power tool 1000 for display to a user. The GUI 405B includes a battery connection indicator 425. In some embodiments, the battery connection indicator 425 includes four of the indicators 130, each indicator 130 corresponds to a respective battery pack 210A-210D. The battery connection indicator 425 provides an indication when each battery pack 210A-210D is connected to the battery pack interface 110. For example, if the first battery pack 210A and the second battery pack 210B are connected to the battery pack interface 110, an indicator of the battery connection indicator 425 corresponding to the first battery pack 210A and an indicator of the battery connection indicator 425 corresponding to the second battery pack 210B illuminate LEDs (e.g., green LEDs).

In some embodiments, the GUI 405B includes a total battery fuel gauge 430. In the illustrated embodiment, the total battery fuel gauge 430 includes four of the indicators 130. In some embodiments, the total battery fuel gauge 430 provides an indication of a total SOC (e.g., a combination of the SOC) of the first group of battery packs 205A and the second group of battery packs 205B. In such embodiments, the indication of the total SOC includes the indication of the lowest SOC battery pack between the first battery pack 210A (illustrated as first battery pack fuel gauge 420A) and the second battery pack 210B (illustrated as second battery pack fuel gauge 420B) and the indication of the lowest SOC battery pack between the third battery pack 210C (illustrated as third battery pack fuel gauge 420C) and the fourth battery pack 210D (illustrated as second battery pack fuel gauge 420D). In some embodiments, when only two battery packs (e.g., the first battery pack 210A and the second battery pack 210B) are attached to the power tool 1000, the fuel gauge 430 indicates the lowest SOC between the first battery pack 210A and second battery pack 210B. However, if more than two battery packs are attached to the power tool 1000, a total or average capacity can be indicated using the fuel gauge 430. For example, the first battery pack 210A has a capacity of 100%, the second battery pack 210B has a capacity of 50%, the third battery pack 210C has a capacity of 50%, and the fourth battery pack 210D has a capacity of 100%. The total capacity then corresponds to 75% (e.g., three bars illuminated). In some embodiments, a total number of LED segments can be used to indicate state of charge percentage. For example, based on a four LED fuel gauge for each battery pack, the number of LED segments for the lowest SOC battery pack in the first group of battery packs 205A is added to the number of LED segments for the lowest SOC battery pack in the second group of battery packs 205B. The sum of LED segments is then divided by eight to determine the SOC percentage. For example, if the two lowest SOC battery packs in each group of battery packs includes three LED segments, the SOC percentage would be 75% and three LED segments in the fuel gauge 430 will be illuminated.

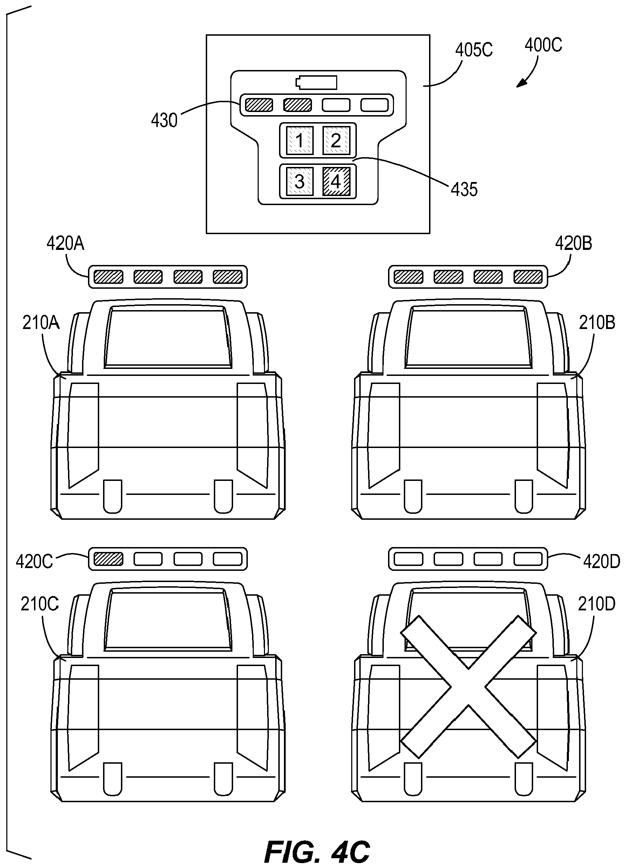

FIG. 4C illustrates a system 400C including a GUI 405C of the power tool 1000 and a battery pack combination, according to some embodiments. In some embodiments, the GUI 405C is any type of suitable user interface or display. In some embodiments, the GUI 405C is disposed on the handle 1236 of the power tool 1000 for display to a user. The GUI 405C includes a battery connection indicator 435 and the total battery fuel gauge 430. The battery connection indicator 435 performs a similar function to the battery connection indicator 425 with reference to FIG. 4B. Additionally, when the electronic controller 101 determines that a battery pack of the plurality of battery packs 210A-210D is not connected to the battery pack interface 110 (for example, illustrated as the fourth battery pack 210D), the battery connection indicator 435 provides an indication, via the indicator corresponding to the fourth battery pack 210D, in a different color than the indicators corresponding to each battery pack 210A-210C (e.g., a red LED).

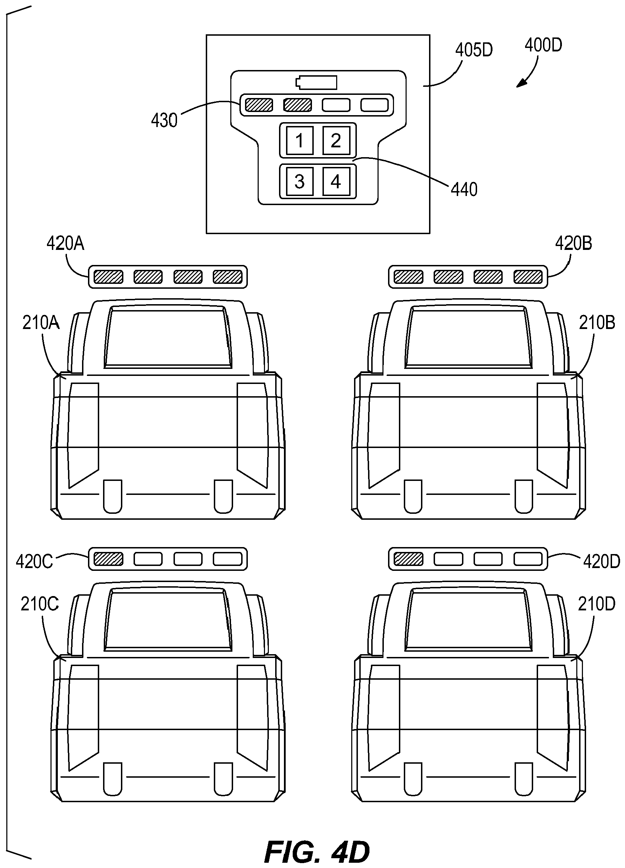

FIG. 4D illustrates a system 400D including a GUI 405D of the power tool 1000 and a battery pack combination, according to some embodiments. In some embodiments, the GUI 405D is any type of suitable user interface or display. In some embodiments, the GUI 405D is disposed on the handle 1236 of the power tool 1000 for display to a user. The GUI 405D includes a battery connection indicator 440 and the total battery fuel gauge 430. The battery connection indicator 440 performs a similar function to the battery connection indicator 425, 435 with reference to FIGS. 4B-4C. Additionally, when the electronic controller 101 determines that a battery pack of the plurality of battery packs 210A-210D is connected to the battery pack interface, the battery connection indicator 440 provides an indication of the connected battery pack. For example, if the first battery pack 210A and the second battery pack 210B are connected to the battery pack interface 110, an indicator of the battery connection indicator 440 corresponding to the first battery pack 210A and an indicator of the battery connection indicator 440 corresponding to the second battery pack 210B illuminate white LEDs. In some embodiments, the total battery fuel gauge 430 provides an indication of the total SOC only when the trigger 115B is pulled. In other embodiments, the total battery fuel gauge 430 provides an indication of a decrease in the total SOC when a depleted battery pack is connected to the battery pack interface 110.

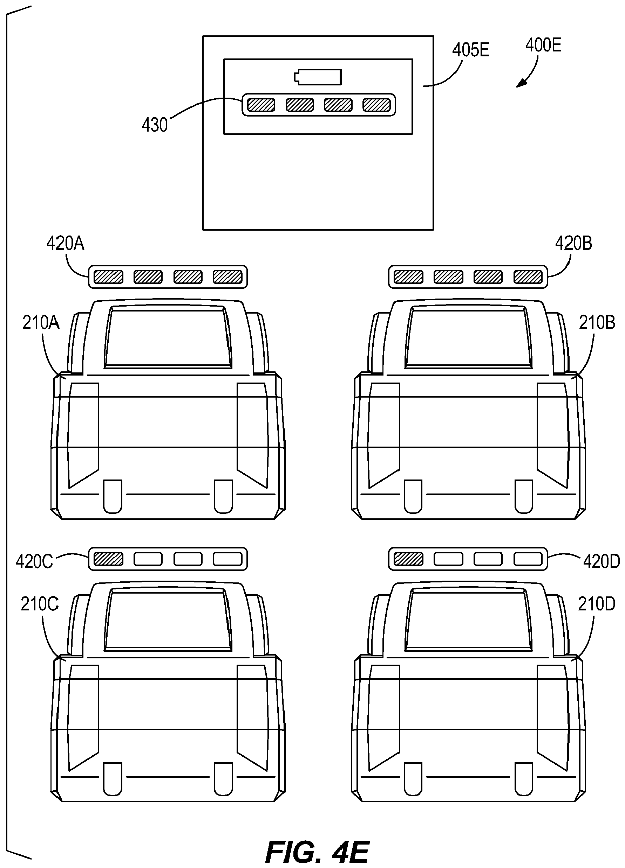

FIG. 4E illustrates a system 400E including a GUI 405E of the power tool 1000 and a battery pack combination, according to some embodiments. In some embodiments, the GUI 405E is any type of suitable user interface or display. In some embodiments, the GUI 405E is disposed on the handle 1236 of the power tool 1000 for display to a user. In the illustrated embodiment, the GUI 405E includes the total battery fuel gauge 430. In some embodiments, the total battery fuel gauge 430 provides the indication of the total SOC that includes the indication of the lowest SOC battery pack between the first battery pack 210A (illustrated as first battery pack fuel gauge 420A) and the second battery pack 210B (illustrated as second battery pack fuel gauge 420B) and the indication of the lowest SOC battery pack between the third battery pack 210C (illustrated as third battery pack fuel gauge 420C) and the fourth battery pack 210D (illustrated as second battery pack fuel gauge 420D). In some embodiments, when only two battery packs (e.g., the first battery pack 210A and the second battery pack 210B) are attached to the power tool 1000, the fuel gauge 430 indicates the lowest SOC between the first battery pack 210A and second battery pack 210B. However, if more than two battery packs are attached to the power tool 1000, a total or average capacity can be indicated using the fuel gauge 430. For example, the first battery pack 210A has a capacity of 100%, the second battery pack 210B has a capacity of 50%, the third battery pack 210C has a capacity of 50%, and the fourth battery pack 210D has a capacity of 100%. The total capacity then corresponds to 75% (e.g., three bars illuminated). In some embodiments, a total number of LED segments can be used to indicate state of charge percentage. For example, based on a four LED fuel gauge for each battery pack, the number of LED segments for the lowest SOC battery pack in the first group of battery packs 205A is added to the number of LED segments for the lowest SOC battery pack in the second group of battery packs 205B. The sum of LED segments is then divided by eight to determine the SOC percentage. For example, if the two lowest SOC battery packs in each group of battery packs includes three LED segments, the SOC percentage would be 75% and three LED segments in the fuel gauge 430 will be illuminated.

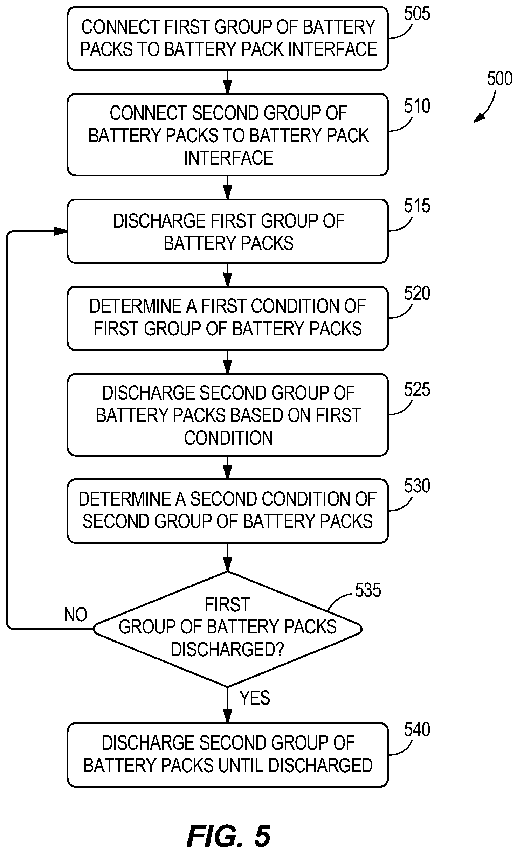

FIG. 5 illustrates a flow chart of a method 500 of switching between groups of battery packs for supplying power to a power tool 1000. The method 500 begins with connecting the first group of battery packs 205A to the battery pack interface 110 (BLOCK 505). The method 500 includes connecting the second group of battery packs 205B to the battery pack interface 110 (BLOCK 510). The method 500 also includes discharging the first group of battery packs 205A (BLOCK 515). The method 500 also includes the controller 101 determining a first condition (e.g., a predetermined time having elapsed, a voltage state, an overtemperature condition, etc.) of the first group of battery packs 205A while discharging (BLOCK 520). The method 500 further includes discharging the second group of battery packs 205B based on the determination of the first condition (BLOCK 525). For example, when the controller 101 determines the first condition, the controller 101 generates and transmits a switch control signal to stop discharging the first group of battery packs 205A and begin discharging the second group of battery packs 205B. In some embodiments, the controller 101 switches discharging between the first group of battery packs 205A and the second group of battery packs 205B at a predetermined time period. For example, the predetermined time period is within a range of every 5 seconds to 30 seconds. In some examples, the predetermined time period is less than 5 seconds or greater than 30 seconds. In some embodiments, the predetermined time period is 100 milliseconds or less. In some embodiments, the controller 101 switches discharging between the first group of battery packs 205A and the second group of battery packs 205B at a roll-off point (e.g., when the SOC of the first group of battery packs 205A or the SOC of the second group of battery packs 205B reaches the low voltage SOC threshold or a low voltage cutoff). In some embodiments, the controller 101 switches discharging between the first group of battery packs 205A and the second group of battery packs 205B after the first group of battery packs 205A is fully discharged or has otherwise reached end of discharge (e.g., 0%-20% SOC). The method 500 also includes the controller 101 determining a second condition (e.g., a predetermined time having elapsed, a voltage state, an overtemperature condition, etc.) of the second group of battery packs 205B while discharging (BLOCK 530). The method 500 also includes determining whether the first group of battery packs 205A has reached end of discharge (e.g., if the SOC of the first group of battery packs 205A is below the SOC threshold) (BLOCK 535). If the first group of battery packs 205A is not determined to have reached end of discharge, the method 500 returns to continue discharging the first group of battery packs 205A based on the determination of the second condition. If the first group of battery packs 205A is determined to have reached end of discharge, the method 500 further includes continuing to discharge the second group of battery packs 205B (BLOCK 540).

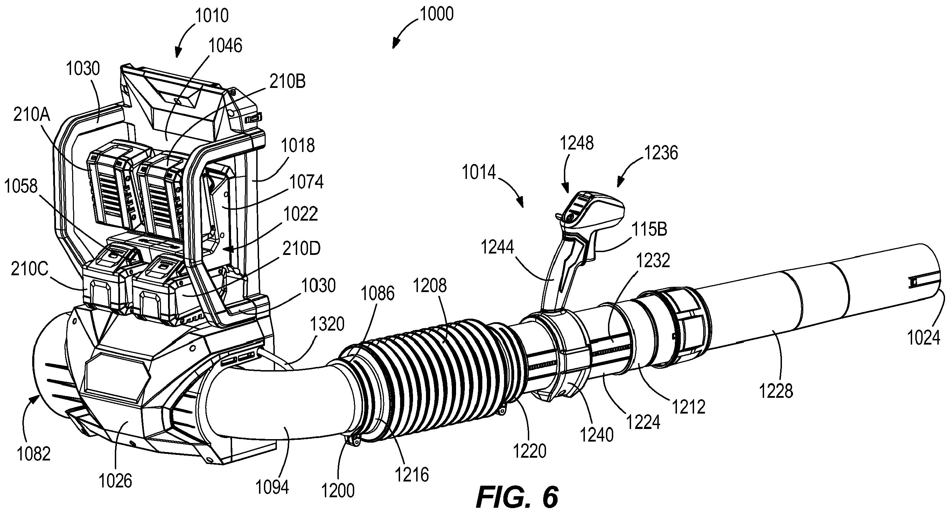

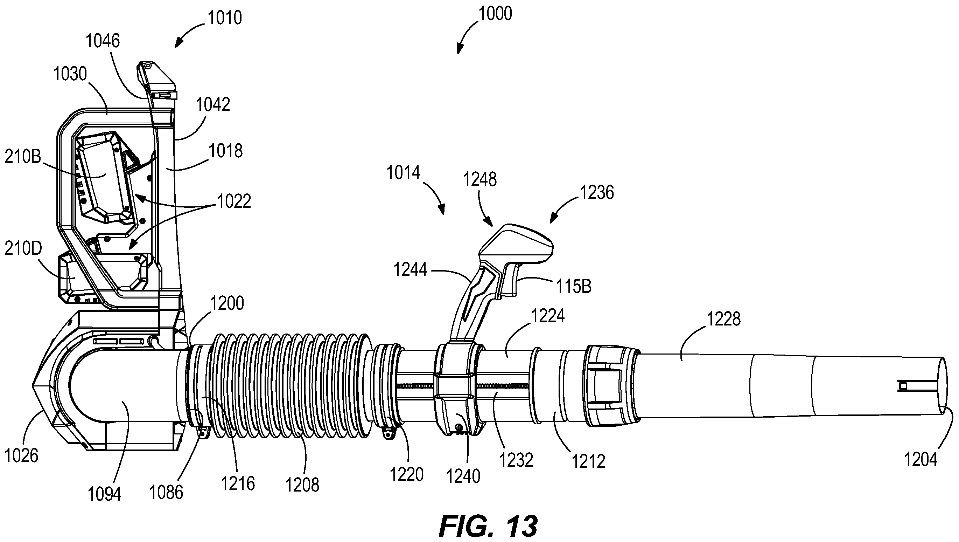

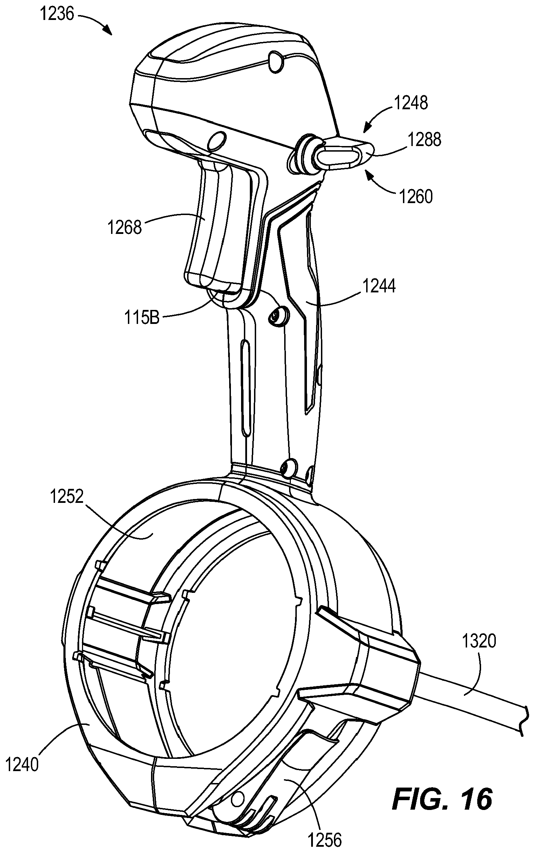

FIGS. 6-18 illustrate a battery pack powered power tool 1000. As shown, the power tool 1000 is embodied as a blower, though in other embodiments, may be another battery pack powered power tool (e.g., outdoor power equipment for lawn maintenance, snow or other weather maintenance, spraying, conditioning, or the like). The power tool 1000 includes a backpack portion 1010 worn by an operator and an arm portion 1014 coupled to the backpack portion 1010. The backpack portion 1010 includes a backing plate 1018, a plurality of battery receptacles 1022, and a blower 1026. The arm portion 1014 includes a flexible conduit 1208 and a rigid conduit 1212 and a handle 1236 mounted to the rigid conduit 1212 for controlling operation of the power tool 1000.

With reference to FIGS. 6-12, the backpack portion 1010 is sized to be worn and supported by a user/operator (i.e., a person). In the embodiment shown, the backpack portion 1010 is supported on a back of the user with the backing plate 1018 abutting against the back of the user. In other embodiments, the backpack portion 1010 may be otherwise supported on the user (e.g., worn on the front side/chest of the user). Straps such as shoulder straps and/or a waistband strap are coupled to the backing plate 1018 for securing the backing plate 1018 to the user.

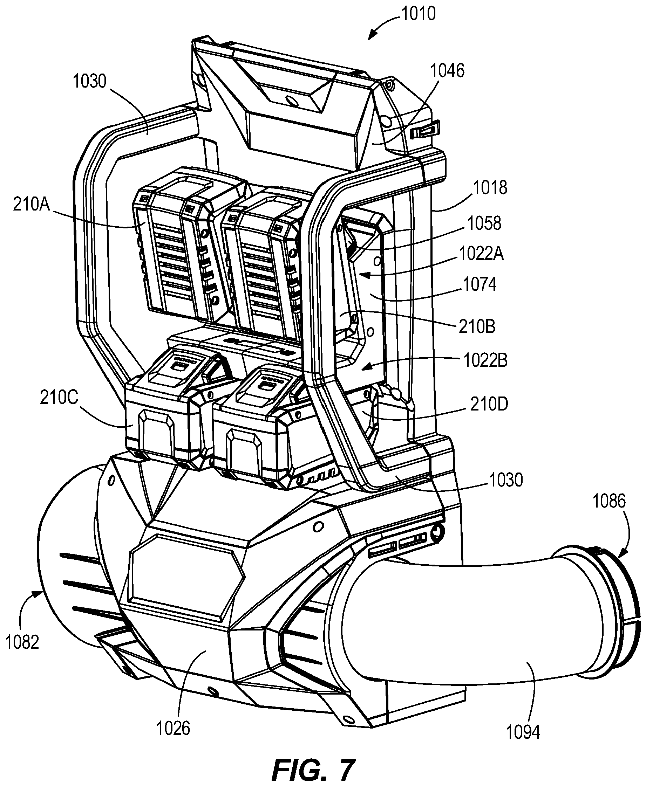

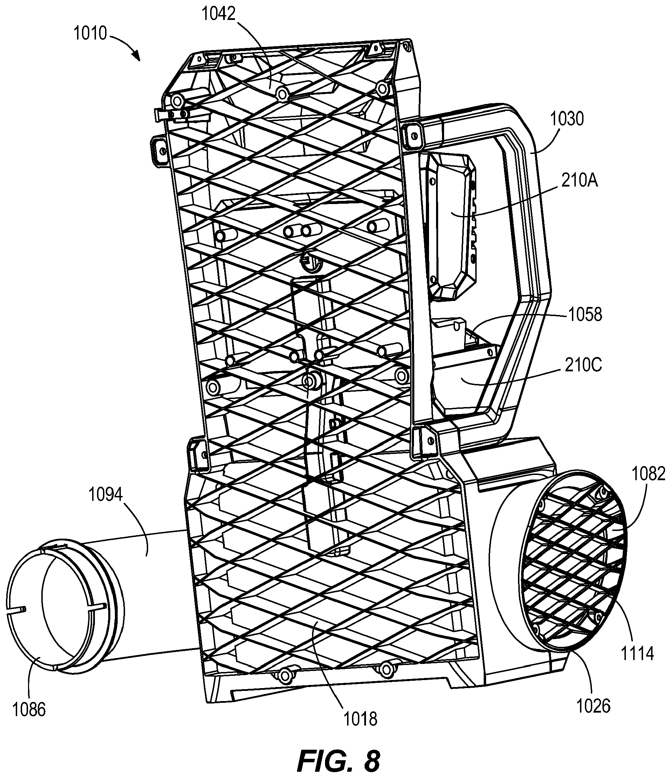

The backing plate 1018 is a thin-walled plate having a thickness (substantially less than the width or the height of the backing plate 1018. The thickness of the backing plate 1018 extends between a first surface 1042 (FIG. 8) that abuts the back of the user and a second surface 1046 (FIG. 7) opposite the first surface 1042. The height of the backing plate 1018 corresponds generally to the distance between the shoulders and lower back or waist of the user. The width of the backing plate 1018 corresponds generally to the width of the torso of the user. As shown in FIG. 8, the first surface 1042 has a thin-walled diamond pattern for increased strength and decreased weight. The battery receptacles 1022 are located at the second surface 1046, opposite the first surface 1042. Handles 1030 for carrying the backpack portion 1010 are mounted to opposing widthwise sides of the backing plate 1018 and are each coupled to the backing plate at two distinct vertically-spaced points along the height of the backing plate 1018.

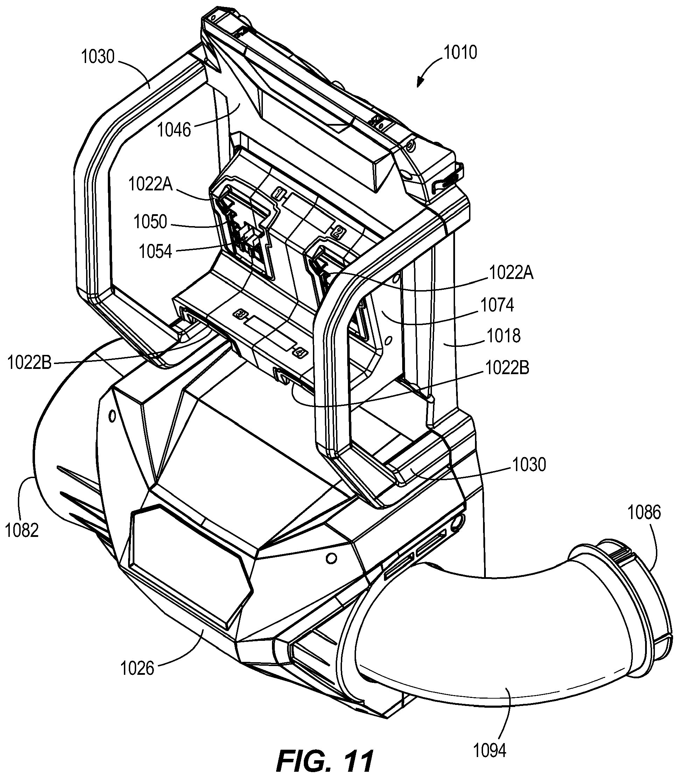

As shown in FIG. 11, the plurality of battery receptacles 1022 includes four receptacles 1022, through in other embodiments, more (e.g., five, six, seven, eight) or less (e.g., two, three) battery receptacles 1022 may be utilized. Each battery receptacle 1022 is configured to receive a single battery pack 210A-D such that the power tool 1000 is configured to simultaneously receive four battery packs 210A-D (as shown in FIG. 7). Each receptacle 1022 includes a mechanical interface 1050 for mechanically receiving the battery pack interface 110 of a respective battery pack 210A-D and an electrical interface 1054 for electrically receiving the battery pack interface 110 of the respective battery pack 210A-D. Each mechanical interface physically couples the battery pack 210A-D to the backpack portion 1010. As shown, the mechanical interface 1050 is embodied as a rail that engages a mating rail of the battery pack 120A-D, though other mechanical interfaces may be utilized. In some embodiments, the mechanical interface 1050 includes a lock or latch such that the battery pack 210A-D is mechanically secured to the backpack portion 1010 until a user depresses one or more inputs (e.g., buttons 1058) to uncouple the latch and permit removal of the respective battery 210A-D. The electrical interface 1054 includes terminals that engage terminals of the respective battery pack 210A-D to electrically couple the battery 210A-D to the power tool 1000.

With reference to FIG. 7, the battery receptacles 1022 are arranged in pairs, with a first (upper) pair of battery receptacles 1022A being located adjacent to one another in the widthwise direction and a second (lower) pair of battery receptacles 1022B being located adjacent to one another in the widthwise direction at a height below the first pair of battery receptacles 1022A. The pairs 1022A, 1022B are generally aligned with one another with the first pair of receptacles 1022A located at a vertical position above the second pair of receptacles, forming a rectangular array of the four battery receptacles 1022.

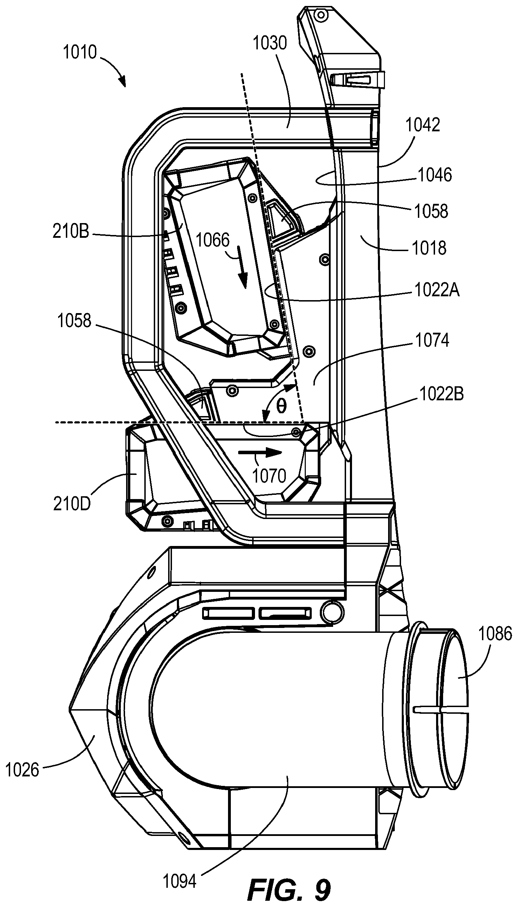

With reference to FIGS. 9-10, the first pair of battery receptacles 1022A (e.g., the mechanical and electrical interfaces 1050, 1054 of the first pair of battery receptacles 1022A) are arranged at an angle relative to the second pair of battery receptacles 1022B (e.g., (e.g., the mechanical and electrical interfaces 1050, 1054 of the second pair of battery receptacles 1022B). Written another way, the battery packs 210A, 210B mounted in the first pair of battery receptacles 1022A are angled relative to the battery packs 210C, 210D mounted in the second pair of battery receptacles 1022B. The second pair of battery receptacles 1022B receive respective batteries 210C, 210D in substantially horizontal positions such that a base or bottom surface of the battery 210C, 210D is perpendicular to a height of the backing plate 1018 and is generally parallel to a ground surface when the backpack portion 1010 is worn by a user. The first pair of battery receptacles 1022A are angled relative to the second pair 1022B by an angle θ of approximately 80 degrees (e.g., 75-85 degrees, 70-90 degrees, 45-90 degrees, less than 90 degrees). Such an arrangement locates the center of gravity of the first (upper) pair of batteries 210A, 210B nearer to the back of the user, decreasing the moment generated by the weight of the upper batteries 210A, 210B on the user.

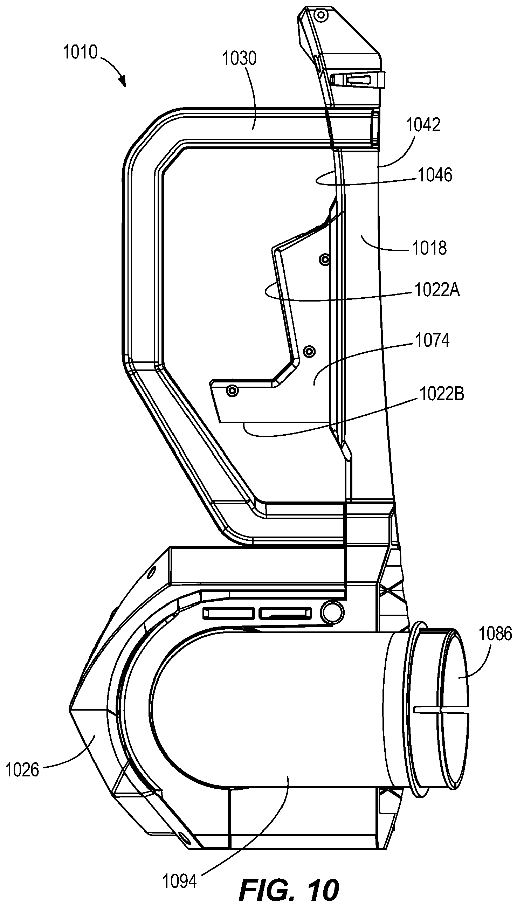

With continued reference to FIGS. 9 and 10, coupling the battery pack interface 110 of the batteries 210A, 210B with the mechanical and electrical interfaces 1050, 1054 of the first pair of receptacles 1022A includes sliding the battery down and to the right (along arrow 1066 within the perspective of FIGS. 9 and 10) along the mechanical interface 1050. Coupling the battery pack interface 110 of the batteries 210C, 210D with the mechanical and electrical interfaces 1050, 1054 of the second pair of receptacles 1022B includes sliding the battery only to the right (along arrow 1070 within the perspective of FIGS. 9 and 10) along the mechanical interface 1050.

The battery receptacles 1022 are formed by an L-shaped protrusion 1074 extending rearward from the second surface 1046 of the backing plate 1018. The mechanical and electrical interfaces 1050, 1054 for receiving the first pair of batteries 210A, 210B are formed in the upper (substantially vertical) leg of the L-shaped protrusion 1074 and the mechanical and electrical interfaces 1050, 1054 for receiving the second pair of batteries 210C, 210D are formed in the lower (substantially horizontal) leg of the L-shaped protrusion 1074.

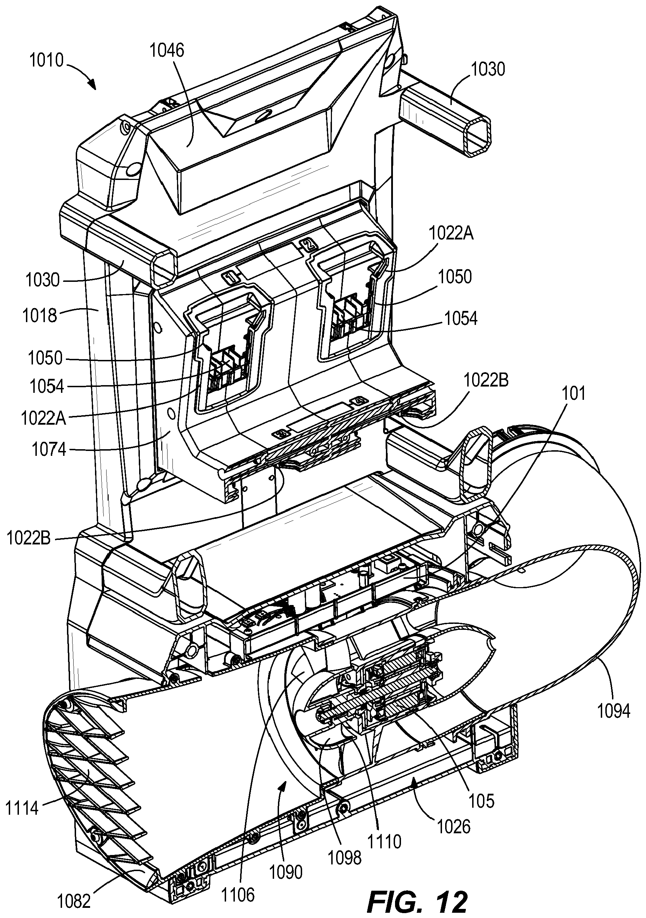

The batteries 210A-D are configured to function as a power source for the blower 1026. The blower 1026 is mounted below the battery receptacles 1022 (in the height direction) and includes an inlet 1082 through which air is drawn, an outlet 1086 through which air is expelled, and an air mover 1090 positioned between the inlet 1082 and the outlet 1086 for drawing air through the inlet 1082 and expelling the air from the inlet 1082 through the outlet 1086. As shown in FIG. 12, the inlet 1082 includes a grate 1114 to prevent large debris from being drawn into the inlet 1082. The outlet 1086 is coupled to the arm portion 1014 to direct airflow from the inlet 1082, through the outlet 1086, and to the arm portion 1014.

With continued reference to FIG. 12, the blower 1026 includes a tubular body 1094 that extends between the inlet 1082 and the outlet 1086. In the embodiment shown, the body 1094 is generally J-shaped having a smooth, curved bend therein such that that a central axis of the outlet 1086 is arranged at an angle (e.g., 70-110 degrees, 80-100 degrees, 85-95 degrees, approximately perpendicular) relative to a central axis of the inlet. The air mover 1090 is positioned within the body 1094 and, in the present embodiment, includes an impeller 1098 driven by a motor 105. The impeller 1098 includes a plurality of blades 1106 extending radially outward from a central hub 1110. Each blade 1106 is defined by a curvilinear plane extending radially outward and axially along the hub 1110. The impeller 1098 rotates about an axis of rotation. In the embodiment shown, the axis of rotation of the impeller 1098 is colinear with the central axis of the inlet 1082. The motor 105 includes an output shaft that rotates the impeller, the output shaft having a rotational axis colinear with the rotational axis of the impeller. In other embodiments, the motor 105 may be coupled to the impeller 1098 via a geartrain such that the rotational axes of the motor 105 and impeller 1098 are offset from one another. Airflow is drawn through the inlet 1082 by the motor-driven impeller 1098, through the outlet 1086, and to the arm portion 1014, such that the user is able to direct the airflow by manipulating the position and orientation of the arm portion 1014.

With reference to FIGS. 6, 13, and 14, the arm portion 1014 is a hollow tube that extends between an inlet 1200 at a first end and an outlet 1204 at a second end opposite the first end. The arm portion 1014 is coupled to the backpack portion 1010 such that the inlet 1200 of the arm portion 1014 is coupled to the outlet 1086 of the backpack portion 1010 to receive the airflow generated by the air mover 1090.

The arm portion 1014 includes a flexible conduit 1208 and a rigid conduit 1212. The flexible conduit 1208 defines the inlet 1200 and extends from the inlet 1200 to the rigid conduit 1212. The rigid conduit 1212 defines the outlet 1204 and extends from the outlet 1204, towards the inlet 1200, and to the flexible conduit 1208. The flexible conduit 1208 allows the rigid conduit 1212 to move relative to the backpack portion 1010 such that the outlet 1204 of the arm portion 1014 can be directed in varying directions by the user. As shown, the flexible conduit 1208 is a corrugated pipe (e.g., corrugated plastic pipe) to allow for flexing and deviation from a linear passageway.

The flexible conduit 1208 is coupled to the body 1094 of the blower 1026 via a clamp 1216 such as a worm gear clamp. Further, the flexible conduit 1208 is coupled to the rigid conduit 1212 via a similar clamp 1220. In some embodiments, the clamps 1216, 1220 not only secure the flexible conduit 1208 to the blower 1026 and the rigid conduit 1212, respectively, but also provide sealing between the respective components to limit airflow losses between the air mover 1090 and the outlet 1204 of the arm portion 1014. In other embodiments, sealing is provided by a separate component (e.g., a foam or rubber seal/gasket).

The rigid conduit 1212 includes a first portion 1224 adjacent the flexible conduit 1208 and a second portion 1228 extending between the first portion 1224 and the outlet 1204. The first portion 1220 includes a handle holding mechanism 1232 extending axially along diametrically opposed sides of the first portion 1224 for securing the handle 1236 at various different locations along the axial length of the first portion 1224. Different users of different heights and different arm lengths can identify a preferred position of the handle 1236 along the handle holding mechanism 1232 for desired comfort. As shown, the handle holding mechanism 1232 includes discrete locations formed by a plurality of evenly spaced and axially offset protrusions about which the handle 1236 can be tightened or clamped. When the handle 1224 is tightened, the protrusions prevent axial movement of the handle 1236 (and optionally prevent rotation of the handle 1236) relative to the first portion 1224. In some embodiments, the diameter of the second portion 1228 may be less than the diameter of the first portion 1224 such that the velocity of the airflow increases as it approaches the outlet 1204.

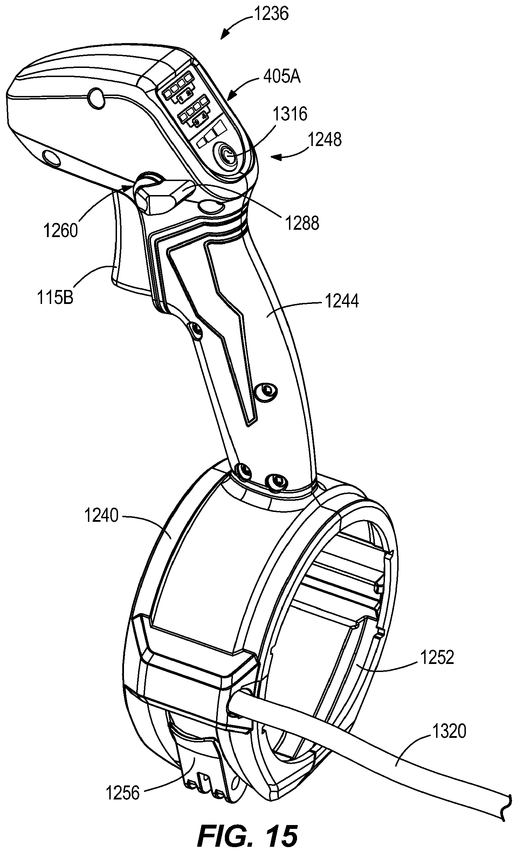

The handle 1236 is mounted to the rigid conduit 1212 and is shown in greater detail in FIGS. 15-18. The handle 1236 includes a mount 1240, a hand grip 1244, and a user input and interface 1248. The mount 1240 is generally cylindrical and defines a central opening 1252 that surrounds the first portion 1224 of the rigid conduit 1212. The central opening 1252 deviates from a cylindrical opening (e.g., protrusions, indents) that engage the handle holding mechanism 1232. In some embodiments, the mount 1240 includes a latch 1256 that is movable between an open position and a closed position. In the closed position, the latch 1256 locks the axial and rotational position of the handle 1236 relative to the rigid conduit 1212. In the open position, the latch 1256 allows the handle 1236 to move axially along the rigid conduit 1212. In some embodiments, the handle 1236 is rotatable relative to the rigid conduit 1212 when the latch 1256 is in the open position. In the embodiment shown, the mount 1240 is not seamless, but is openable at the outer periphery by moving the latch 1256 between the open and closed positions. The mount is openable such that the diameter of the central opening 1252 is greater in the open position than in the closed position to permit the handle 1236 to move axially along the conduit 1212 in the open position and engage the conduit 1212 in the closed position.

The hand grip 1244 extends upward from the mount 1240 and is defined by an ergonomic gripping portion around which the user places their hand to engage the handle 1236. The user input and interface 1248 is coupled to a distal end of the hand grip 1244 such that the user's hand engages the handle 1236 at the hand grip 1244 between the mount 1240 and the user input and interface 1248.

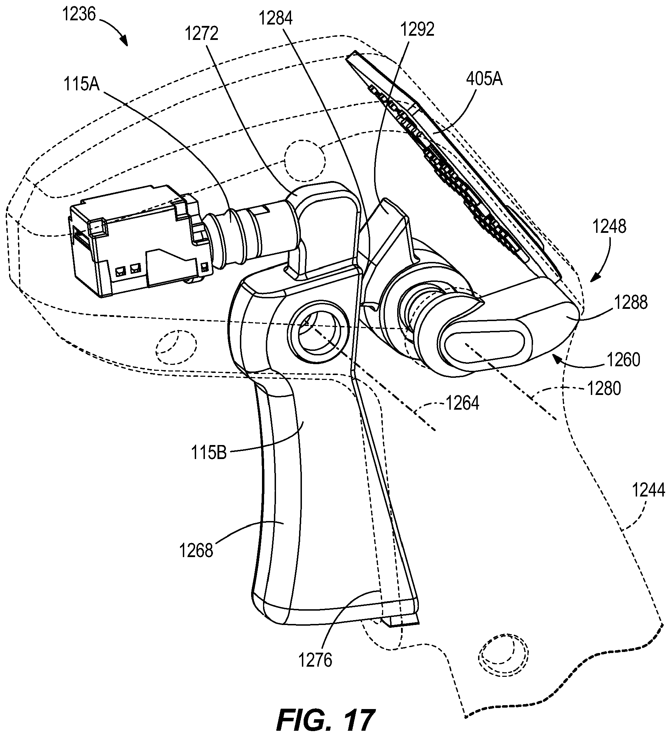

As shown in FIGS. 17-18, the user input and interface 1248 includes the trigger 115B (previously described with respect to the trigger switch 115A of FIG. 1), a power hold actuator 1260, and the graphical user interface 405A (previously described with respect to the system 400A of FIG. 4B). The trigger 115B is rotatable about a rotational axis 1264 between a disengaged position and a fully engaged position. The disengaged position is illustrated in FIG. 17, with the trigger 115B positioned outward (forward). In the embodiment shown, the trigger 115B is biased to the disengaged position such that it rests in the disengaged position when the trigger 115B is not actuated by the user. In the disengaged position, the trigger switch 115A is not engaged such that no airflow is generated by the air mover 1090. The trigger 115B is movable from the disengaged position towards the fully engaged position by depressing the trigger 115B (moving the trigger towards the hand grip 1244). In the fully engaged position, the trigger switch 115A is engaged by the trigger 115B such that airflow is generated by the air mover 1090. The trigger 115B engages the trigger switch 115A at positions between the disengaged position and the fully engaged position such that the rotational velocity of the air mover 1090 and the resultant airflow velocity through the arm portion 1014 increases from the disengaged position to a maximum velocity at the fully engaged position. The rotational velocity of the air mover 1090 may be proportional to the displacement of the trigger from the disengaged position.

As shown, the trigger 115B includes a user engagement surface 1268 positioned below the rotational axis 1264. A rotational stop 1276 is coupled to (e.g., integrally formed with) the trigger 115B and engages the housing of the hand grip 1244A to prevent rotation beyond the disengaged position (away from the fully engaged position). A cam surface or trigger switch engaging surface 1272 is coupled to (e.g., integrally formed with) the trigger 115B and is located above the rotational axis 1264 such that rotation of the trigger 115B in a counterclockwise direction (from the perspective of FIG. 17) moves the user engagement surface to the right while the trigger switch engaging surface 1272 is moved to the left to move into engagement with the trigger switch 115A.

The power hold actuator 1260 is mounted to a side of the hand grip 1244 such and is rotatable about a rotational axis 1280 parallel to and offset from the rotational axis 1264 of the trigger 115B. The power hold actuator 1260 includes a locking cam 1292 that selectively engages a rear surface 1284 of the trigger 115B (the rear surface 1284 being located opposite the user engagement surface 1268 of the trigger 115B) to prevent movement of the trigger 115B. The power hold actuator 1260 further includes a user input 1288 (e.g., lever, switch, rotating handle) for rotating the locking cam 1292 between a locking position and an unlocking position. In the unlocking position, the locking cam 1292 does not limit the movement of the trigger 115B. In the locking position, the locking cam 1292 engages the rear surface 1284 of the trigger 115B to maintain the current position of the trigger 115B. If the power hold actuator 1260 is in the locking position when the trigger 115B is in the disengaged position, the trigger 115B is locked in the disengaged position and cannot be actuated. If the power hold actuator 1260 is in the locking position when the trigger 115B is in the fully engaged position, the trigger 115B is locked in the fully engaged position and the air mover 1090 maintains the rotational velocity associated with the fully engaged position, even when the user removes their finger from the trigger 115B. If the power hold actuator 1260 is in the locking position when the trigger 115B is in an intermediate position, similar to the fully engaged position, the trigger 115B is locked in the current position and the air mover 1090 maintains the rotational velocity associated with the position of the trigger 115B, even when the user removes their finger from the trigger 115B. The locking position of the locking cam 1292 may differ depending on the rotational position of the trigger 115B and is defined as the position in which the locking cam 1292 maintains the trigger in its current position.

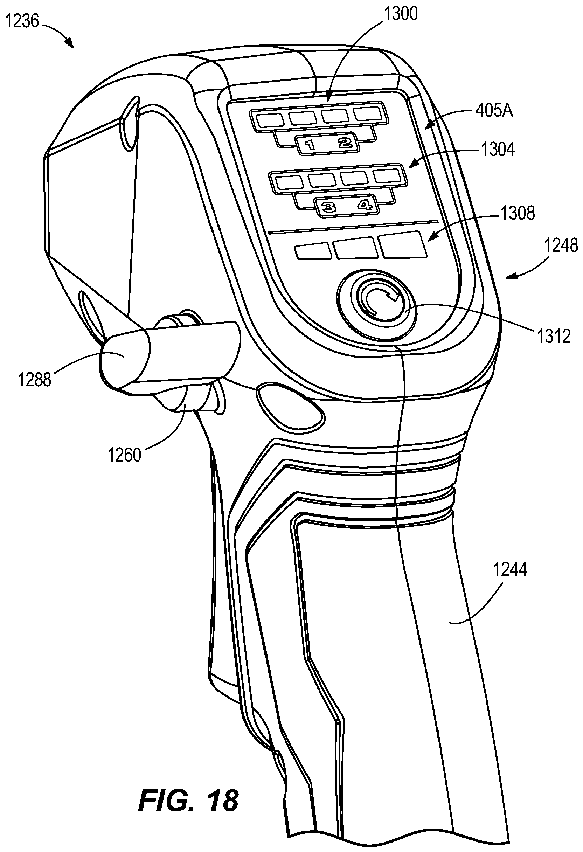

The graphical user interface (GUI) 405A is illustrated in FIG. 18. In some embodiments, the GUI 405A includes a first set of indicators 1300 (e.g., lights such as light emitting diodes) associated with the first pair of batteries 210A, 210B, a second set of indicators 1304 (e.g., lights such as light emitting diodes) associated with the second pair of batteries 210C, 210D, and a third set of indicators 1308 (e.g., lights such as light emitting diodes) associated with a mode selection input 1312 (e.g., button, switch). The first set of indicators 1300 identify the charge level or other battery status identifier (e.g., damaged or faulty) of the first pair of batteries 210A, 210B received in the upper battery receptacles 1022A. The second set of indicators 1304 identify the charge level or other battery status identifier (e.g., damaged or faulty) of the second pair of batteries 210C, 210D received in the lower battery receptacles 1022B. The mode selection input 1312 allows a user to switch between different modes associated with different fan speeds. A first operational mode is a battery saver, low power, low fan speed mode with a first maximum rotational velocity of the air mover 1090 achieved by moving the trigger 115B to the fully engaged position. A second operational mode is a standard operational mode or normal speed mode with a second maximum rotational velocity of the air mover 1090 (greater than the first maximum rotational velocity of the air mover 1090) achieved by moving the trigger 115B to the fully engaged position. A third operational mode is a highspeed mode with a third maximum rotational velocity of the air mover 1090 (greater than the second maximum rotational velocity of the air mover 1090) achieved by moving the trigger 115B to the fully engaged position. IN some embodiments, the third operational mode is only achievable when the requisite number of batteries 210A-210D are coupled to the respective interfaces 1022.

The third set of indictors 1308 identify which of the first, second, and third operational mode is currently selected. In some embodiments, each of the three indicators 1308 separately illuminates in response to selection of the corresponding first, second, and third operational mode. In other embodiments, the first indicator of the third set of indicators 1308 illuminates in the first operational mode, the first and second indicators of the third set of indicators 1308 illuminates in the second operational mode, and all three indicators of the third set of indicators 1308 are simultaneously illuminated in the third operational mode.

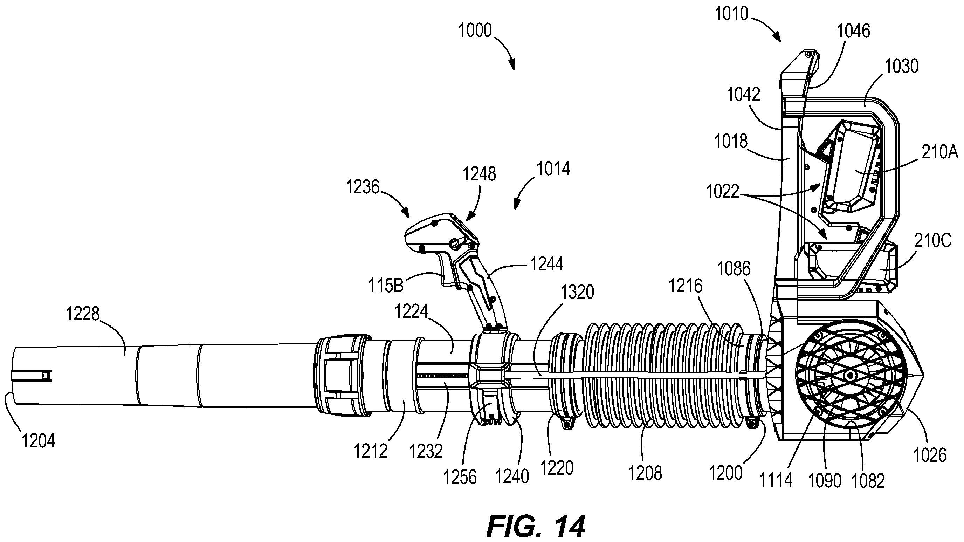

As shown in FIGS. 14-16, the handle 1236 is electrically coupled to the backpack portion 1010 (and more specifically to the controller 101 mounted within the backpack portion 1010) via a cable 1320 extending from the handle 1236 to the controller 101. The cable 1320 is external to the flexible conduit 1208 and rigid conduit 1212 and extends into the mount 1240, through the hand grip 1244, and to the trigger switch 115A and the GUI 405A. The controller 101 is likewise electrically connected to the air mover 1090 and batteries 205A-D such that signals provided by the trigger switch 115A and the GUI 405A result in signals for controlling the air mover 1090.

In operation, the batteries 210A-D of the battery pack powered power tool 1000 are operated as described above with respect to FIGS. 1-5. The power tool 1000 is operated based on user control provided through the user input and interface 1248. To actuate the power tool 1000 to generate airflow, the user moves the trigger 115B from the disengaged position towards the engaged position. Movement of the trigger 115A from the disengaged position engages the trigger switch 115B, which sends an electrical signal to the controller 101. The controller 101 provides a signal to the motor 105 indicative of the position of the trigger 115B to control the rotational velocity of the motor 105. The motor 105 is actuated, rotating the impeller 1098 to draw air through the inlet 1082 and expel air to the outlet 1204 of the arm 1014. Modifying the position of the trigger modifies the rotational velocity of the motor 105 to generate more or less airflow through the outlet 1204. The user can maintain the current position of the trigger 115B without continuing to manually depress the trigger 115B by rotating the power hold actuator 1260 from the unlocked position to the locked position. Further, the user can modify the operational mode of the power tool 1000 to modify the maximum airflow velocity by selecting different operational modes via the mode selection input 1312.

Although the disclosure has been described in detail with reference to certain preferred embodiments, variations and modifications exist within the scope and spirit of one or more independent aspects of the disclosure as described. Various features and advantages are set forth in the following claims. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A method of switching between groups of battery packs for supplying power to a power tool including an electronic controller, the method comprising:
   connecting a first group of battery packs to a battery pack interface of the power tool;
   connecting a second group of battery packs to the battery pack interface of the power tool;
   discharging the first group of battery packs to supply power to the power tool;
   determining, using the electronic controller, a first condition of the first group of battery packs;
   discharging the second group of battery packs to supply power to the power tool based on the first condition of the first group of battery packs;
   determining, using the electronic controller, a second condition of the second group of battery packs;
   determining, using the electronic controller, whether the first group of battery packs has reached end of discharge; and
   discharging, in response to determining that the first group of battery packs has not reached end of discharge, the first group of battery packs based on the second condition.
2. The method of clause 1, further comprising:
   discharging, in response to determining that the first group of battery packs has reached end of discharge, the second group of battery packs.
3. The method of clause 1, wherein the second group of battery packs is connected in parallel with the first group of battery packs.
4. The method of clause 3, wherein:
   the first group of battery packs includes a first battery pack and a second battery pack; and
   the second group of battery packs includes a third battery pack and a fourth battery pack.
5. The method of clause 4, wherein:
   the first battery pack is connected in series with the second battery pack; and
   the third battery pack is connected in series with the fourth battery pack.
6. The method of clause 1, further comprising:
   determining, using the electronic controller, whether the first group of battery packs is connected to the battery pack interface;
   displaying, using a user interface and in response to determining that the first group of battery packs is connected to the battery pack interface, a first indication associated with the first group of battery packs;
   determining, using the electronic controller, whether the second group of battery packs is connected to the battery pack interface; and
   displaying, using the user interface and in response to determining that the second group of battery packs is connected to the battery pack interface, a second indication associated with the second group of battery packs.
7. The method of clause 6, further comprising:
   determining, using the electronic controller, a state of charge associated with the first group of battery packs;
   displaying, using the user interface, the state of charge associated with the first group of battery packs;
   determining, using the electronic controller, a state of charge associated with the second group of battery packs; and
   displaying, using the user interface, the state of charge associated with the second group of battery packs.
8. A battery pack powered power tool comprising:
   a backpack portion configured to be supported by a user, the backpack portion including a backing plate, a first battery pack interface coupled to the backing plate for receiving a first battery, and a second battery pack interface coupled to the backing plate for receiving a second battery pack, the second battery pack interface positioned below the first battery pack interface, wherein the first battery pack interface is angled relative to the second battery pack interface by an angle between 45 and 90 degrees; and
   an arm portion including a rigid conduit and a flexible conduit coupling the rigid conduit to the backpack portion, and a handle having a user input and interface configured to control operation of the battery pack powered power tool.
9. The battery pack powered power tool of clause 8, wherein the first battery pack interface extends away from the backing plate by a first distance measured perpendicular to the backing plate, wherein the second battery pack interface extends away from the backing plate by a second distance measured perpendicular to the backing plate, wherein the first distance is less than the second distance.
10. The battery pack powered power tool of clause 8, further comprising an L-shaped protrusion having a substantially vertical leg and a substantially horizontal leg, the L-shaped protrusion extending rearward from the backing plate 1018, wherein the first battery pack interface is formed in the substantially vertical leg and the second battery pack interface is formed in the substantially horizontal leg.
11. The battery pack powered power tool of clause 8, wherein the backpack portion further comprises an air mover, a motor configured to drive the air mover, an inlet through which the air mover is configured to draw air, and an outlet in communication with the flexible arm portion.
12. The battery pack powered power tool of clause 11, wherein the flexible conduit is coupled to the outlet of the backpack portion to receive airflow from the air mover, wherein the rigid conduit is coupled to the flexible conduit to receive airflow from the flexible conduit, and wherein the rigid conduit includes an outlet for expelling the airflow from the rigid conduit.
13. The battery pack powered power tool of clause 12, wherein the handle includes a trigger configured to move from a disengaged position towards a fully engaged position to actuate the air mover.
14. The battery pack powered power tool of clause 13, wherein the handle includes a power hold actuator having a locking cam configured to selectively engage the trigger such that in an unlocking position, the locking cam does not limit the movement of the trigger and in a locking position, the locking cam engages the trigger to maintain the current position of the trigger.
15. The battery pack powered power tool of clause 8, wherein the first battery pack interface is one of a plurality of first battery pack interfaces spaced apart from one another along the backing plate, and wherein the second battery pack interface is one of a plurality of second battery pack interfaces spaced apart from one another along the backing plate, wherein the plurality of first and second battery pack interfaces form a rectangular array.
16. The battery pack powered power tool of clause 8, wherein the first battery pack interface is angled relative to the second battery pack interface by less than 90 degrees.
17. The battery pack powered power tool of clause 8, wherein the first battery pack interface is angled relative to the second battery pack interface by an angle between 75 and 85 degrees.
18. The battery pack powered power tool of clause 8, further comprising a controller programmed to switch between groups of battery packs for supplying power to a power tool including an electronic controller, the controller programmed to:
   connect a first group of battery packs to the first and second battery pack interfaces of the power tool;
   connect a second group of battery packs to the first battery pack interface of the power tool;
   discharge the first group of battery packs to supply power to the power tool;
   determine, using the electronic controller, a first condition of the first group of battery packs;
   discharge the second group of battery packs to supply power to the power tool based on the first condition of the first group of battery packs;
   determine, using the electronic controller, a second condition of the second group of battery packs;
   determine, using the electronic controller, whether the first group of battery packs has reached end of discharge; and
   discharge, in response to determining that the first group of battery packs has not reached end of discharge, the first group of battery packs based on the second condition.
19. The battery pack powered power tool of clause 8, further comprising a controller mounted to the backpack portion and programmed to receive signals from the user input and interface via a cable, wherein the cable is external to the rigid conduit and the flexible conduit.
20. The battery pack powered power tool of clause 8, wherein the handle is repositionable along a length of the rigid conduit between a plurality of positions.

## Claims

1. A method of switching between groups of battery packs for supplying power to a power tool including an electronic controller, the method comprising:
connecting a first group of battery packs to a battery pack interface of the power tool;
connecting a second group of battery packs to the battery pack interface of the power tool;
discharging the first group of battery packs to supply power to the power tool;
determining, using the electronic controller, a first condition of the first group of battery packs;
discharging the second group of battery packs to supply power to the power tool based on the first condition of the first group of battery packs;
determining, using the electronic controller, a second condition of the second group of battery packs;
determining, using the electronic controller, whether the first group of battery packs has reached end of discharge; and
discharging, in response to determining that the first group of battery packs has not reached end of discharge, the first group of battery packs based on the second condition.

2. The method of claim 1, further comprising:
discharging, in response to determining that the first group of battery packs has reached end of discharge, the second group of battery packs.

3. The method of claim 1, wherein the second group of battery packs is connected in parallel with the first group of battery packs,
preferably wherein:
the first group of battery packs includes a first battery pack and a second battery pack; and
the second group of battery packs includes a third battery pack and a fourth battery pack.

4. The method of claim 3, wherein:
the first battery pack is connected in series with the second battery pack; and
the third battery pack is connected in series with the fourth battery pack.

5. The method of any preceding claim, further comprising:
determining, using the electronic controller, whether the first group of battery packs is connected to the battery pack interface;
displaying, using a user interface and in response to determining that the first group of battery packs is connected to the battery pack interface, a first indication associated with the first group of battery packs;
determining, using the electronic controller, whether the second group of battery packs is connected to the battery pack interface; and
displaying, using the user interface and in response to determining that the second group of battery packs is connected to the battery pack interface, a second indication associated with the second group of battery packs.

6. The method of claim 5, further comprising:
determining, using the electronic controller, a state of charge associated with the first group of battery packs;
displaying, using the user interface, the state of charge associated with the first group of battery packs;
determining, using the electronic controller, a state of charge associated with the second group of battery packs; and
displaying, using the user interface, the state of charge associated with the second group of battery packs.

7. A battery pack powered power tool comprising:
a backpack portion configured to be supported by a user, the backpack portion including a backing plate, a first battery pack interface coupled to the backing plate for receiving a first battery, and a second battery pack interface coupled to the backing plate for receiving a second battery pack, the second battery pack interface positioned below the first battery pack interface, wherein the first battery pack interface is angled relative to the second battery pack interface by an angle between 45 and 90 degrees; and
an arm portion including a rigid conduit and a flexible conduit coupling the rigid conduit to the backpack portion, and a handle having a user input and interface configured to control operation of the battery pack powered power tool.

8. The battery pack powered power tool of claim 7, wherein the first battery pack interface extends away from the backing plate by a first distance measured perpendicular to the backing plate, wherein the second battery pack interface extends away from the backing plate by a second distance measured perpendicular to the backing plate, wherein the first distance is less than the second distance.

9. The battery pack powered power tool of claim 7 or 8, further comprising an L-shaped protrusion having a substantially vertical leg and a substantially horizontal leg, the L-shaped protrusion extending rearward from the backing plate 1018, wherein the first battery pack interface is formed in the substantially vertical leg and the second battery pack interface is formed in the substantially horizontal leg.

10. The battery pack powered power tool of claim 7, 8 or 9, wherein the backpack portion further comprises an air mover, a motor configured to drive the air mover, an inlet through which the air mover is configured to draw air, and an outlet in communication with the flexible arm portion.

11. The battery pack powered power tool of claim 10, wherein the flexible conduit is coupled to the outlet of the backpack portion to receive airflow from the air mover, wherein the rigid conduit is coupled to the flexible conduit to receive airflow from the flexible conduit, and wherein the rigid conduit includes an outlet for expelling the airflow from the rigid conduit.

12. The battery pack powered power tool of claim 11, wherein the handle includes a trigger configured to move from a disengaged position towards a fully engaged position to actuate the air mover, preferably wherein the handle includes a power hold actuator having a locking cam configured to selectively engage the trigger such that in an unlocking position, the locking cam does not limit the movement of the trigger and in a locking position, the locking cam engages the trigger to maintain the current position of the trigger.

13. The battery pack powered power tool of any one of claims 7 to 12, wherein:
a) the first battery pack interface is one of a plurality of first battery pack interfaces spaced apart from one another along the backing plate, and wherein the second battery pack interface is one of a plurality of second battery pack interfaces spaced apart from one another along the backing plate, wherein the plurality of first and second battery pack interfaces form a rectangular array, and/or
b) the first battery pack interface is angled relative to the second battery pack interface by less than 90 degrees, and/or
c) the first battery pack interface is angled relative to the second battery pack interface by an angle between 75 and 85 degrees.

14. The battery pack powered power tool of any one of claims 7 to 13, further comprising a controller programmed to switch between groups of battery packs for supplying power to a power tool including an electronic controller, the controller programmed to:
connect a first group of battery packs to the first and second battery pack interfaces of the power tool;
connect a second group of battery packs to the first battery pack interface of the power tool;
discharge the first group of battery packs to supply power to the power tool;
determine, using the electronic controller, a first condition of the first group of battery packs;
discharge the second group of battery packs to supply power to the power tool based on the first condition of the first group of battery packs;
determine, using the electronic controller, a second condition of the second group of battery packs;
determine, using the electronic controller, whether the first group of battery packs has reached end of discharge; and
discharge, in response to determining that the first group of battery packs has not reached end of discharge, the first group of battery packs based on the second condition.

15. The battery pack powered power tool of any one of claims 7 to 14, further comprising a controller mounted to the backpack portion and programmed to receive signals from the user input and interface via a cable, wherein the cable is external to the rigid conduit and the flexible conduit, or wherein the handle is repositionable along a length of the rigid conduit between a plurality of positions.
